(19) Europäisches Patentamt
European Patent Office
Office européen des brevets

(11) **EP 4 772 854 A1**

(12) **EUROPEAN PATENT APPLICATION**
published in accordance with Art. 153(4) EPC

(43) Date of publication:
**08.07.2026 Bulletin 2026/28**

(51) International Patent Classification (IPC):
**G01N 15/00** (2024.01)

(21) Application number: **24864583.0**

(52) Cooperative Patent Classification (CPC):
**G01N 15/00**

(22) Date of filing: **09.09.2024**

(86) International application number:
**PCT/CN2024/117787**

(87) International publication number:
**WO 2025/055863 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **13.09.2023 CN 202311181382
08.04.2024 CN 202410417944
31.05.2024 CN 202410699632
17.06.2024 CN 202410777269
12.08.2024 CN 202411104348**

(71) Applicant: **Resun (Shenzhen) Tech Co., Ltd.
Shenzhen, Guangdong 518000 (CN)**

(72) Inventors:
• **XIONG, Gui
Shenzhen, Guangdong 518000 (CN)**
• **WANG, Zhe
Shenzhen, Guangdong 518000 (CN)**

(74) Representative: **Manitz Finsterwald
Patent- und Rechtsanwaltspartnerschaft mbB
Martin-Greif-Straße 1
80336 München (DE)**

(54) **SINGLE-PARTICLE MICRO-NANO PARTICLE MEASUREMENT DEVICE AND USE THEREOF**

(57) A device for detecting micro/nano particles and applications thereof are provided. The device comprises: a first chamber provided with a first electrode; a second chamber adjacent to the first chamber and provided with a second electrode; a substrate separating the first chamber from the second chamber; and a film covering a side of the substrate facing the first chamber, wherein the film is provided with a micropore. The substrate is provided with an electroosmotic channel, an inner diameter of the electroosmotic channel being larger than a pore size of the micropore and smaller than an inner diameter of the second chamber. The first chamber is in communication with the second chamber via the micropore and the electroosmotic channel. An inner wall of the electroosmotic channel is provided with an electroosmotic channel modification layer, wherein an interface of the electroosmotic channel modification layer has a specific Zeta potential when in contact with an electrolyte.

**FIG. 1**

**Description**

**TECHNICAL FIELD**

The present application relates to the technical field of micro/nano particle detection, specifically to a detection device for micro/nano particles, a detection method, a nanopore chip, a preparation method therefor, and related applications.

**BACKGROUND**

Micro/nano particles (with particle sizes ranging from 1 nm to 10 $\mu$m, hereinafter referred to as micro/nano particles) exhibit many unique physical behaviors due to their size-dependent effects, such as the small size effect, surface effect, and quantum size effect. As the particle size decreases, the surface area-to-volume ratio increases, resulting in unexpected properties that enable their wide application in medicine, chemical engineering, materials, and other fields. Therefore, single-particle detection technology for measuring the size, particle size distribution, particle concentration (also known as concentration or particle concentration), and Zeta potential of micro/nano particles is of great significance in the application of micro/nano particles.

Traditional single-particle detection technologies include: electron microscopy, nanoparticle tracking analysis (NTA), nanoparticle flow cytometry (NanoFCM), and resistive pulse sensing (RPS). Electron microscopy can directly measure the particle size of nanoparticles, but it requires dry sample preparation prior to measurement and fails to reflect the state of a sample in a liquid environment. The basic principle of nanoparticle tracking analysis (NTA) is to track the Brownian motion of nanoparticles in liquid through image analysis and infer the particle size of the nanoparticles based on the speed of their Brownian motion. Nanoparticle tracking analysis is susceptible to the hydrophobicity or hydrophilicity of the sample, the light scattering intensity of the sample, and the accuracy of image acquisition, which results in inaccurate particle size measurement. The basic principle of nanoparticle flow cytometry (NanoFCM) is to pass the sample particles through a laser in a single-file manner using a sheath flow, and infer the particle size by detecting the laser scattering signal. Nanoparticle flow cytometry is also susceptible to the differences in the optical properties of the particles, thereby leading to inaccurate test results.

Nanocoulter technology is a type of resistive pulse sensing (RPS). Its principle is that particles suspended in an electrolyte pass through a small pore along with the electrolyte, displacing the same volume of electrolyte, whereby an instantaneous change occurs in the resistance between the two electrodes inside and outside the pore channel in a constant current circuit, thus generating a potential pulse. The size and frequency of the pulse signal are proportional to the size and number of particles.

Patent CN211122429U describes a device for detecting nanoparticles using nanocoulter technology, but it does not mention the driving force for nanoparticles passing through the nanopore. Additionally, in this patent, single-particle electrophoresis in the electrophoresis cell is used to test the potential, which requires testing under conditions of low sample concentration (to prevent two particles from being in the electrophoresis cell simultaneously), thus limiting its application range.

Patent CN105705934B describes a method for measuring the charge of micro/nano particles using nanocoulter technology. Its basic principle is to consider that the total velocity of the tested particles includes a non-zero convective velocity component and an electrokinetic velocity component, and calculate the charge by determining the value of the electrokinetic velocity component that characterizes the total velocity of the tested particles. Since the measured total velocity includes a non-zero convective velocity component, the method for calculating the charge of the tested particles is rather complicated.

**SUMMARY**

The present application conducts in-depth research on the driving force problem of the existing RPS detection technology and improves the existing device for detecting micro/nano particles, enabling it to drive the to-be-measured particles through micropores for completing the detection of micro/nano particle information only by utilizing the potential difference between the two electrodes without any other external driving force.

In a first aspect of the present application, provided is a micro/nano particle detection device, which includes: a first chamber with a first electrode; a second chamber adjacent to the first chamber and having a second electrode; a substrate separating the first chamber and the second chamber; and a film (also referred to as a microporous film) covering the side of the substrate facing the first chamber; wherein: the film is provided with micropores (also referred to as nanopores); the substrate is provided with an electroosmotic channel, the inner diameter of which is larger than the pore size of the micropores and smaller than the that of the second chamber; the first chamber and the second chamber are in communication through the micropores and the electroosmotic channel; and the inner wall of the electroosmotic channel is provided with an electroosmotic channel modification layer, which has a specific Zeta potential at the interface when in contact with an electrolyte. In the specific embodiment of the present application, the Zeta potential is a negative potential.

In a second aspect of the present application, provided is a method for measuring micro/nano particles, which includes: placing an electrolyte in the device disclosed in the first aspect of the present application; placing to-be-measured micro/nano particles in the first chamber or the second chamber; applying a voltage/current between the first electrode and the second electrode; testing the change in the current/voltage signal flowing through the electrodes; and determining at least one of the particle size, concentration, and Zeta potential information of the to-be-measured particles based on the change in the current/voltage signal.

In a third aspect of the present application, provided are a nanopore chip suitable for the device in the first aspect and a preparation method thereof. The nanopore chip includes: a substrate (including an electroosmotic channel), a film (including micropores), and an electroosmotic channel modification layer; wherein: the substrate has a first surface and a second surface opposite to each other, and is provided with a cavity extending from the second surface to the first surface, i.e., the electroosmotic channel; a film (also referred to as a microporous film), formed on the first surface, the film is provided with at least one micropore (also referred to as a nanopore), the pore size of the micropores is smaller than the inner diameter of the electroosmotic channel, and the projections of all micropores on the first surface are covered by the projection of the electroosmotic channel on the first surface; the electroosmotic channel modification layer is formed on the side wall of the electroosmotic channel, and the interface of the electroosmotic channel modification layer has a specific Zeta potential when in contact with an electrolyte.

It should be understood that the aforementioned nanopore chip can be configured to be disposed vertically at the bottom of the measurement container and immersed in an electrolyte, which can partition the measurement container into a first chamber and a second chamber (corresponding to the first surface and the second surface of the nanopore chip); one of the first chamber and the second chamber is configured for holding the to-be-measured particles; the first electrode and the second electrode are respectively disposed on opposite sides of the nanopore chip, and the first electrode and the second electrode are configured to apply a preset voltage difference to form an electric field in the electrolyte.

In an embodiment of the present application, the electroosmotic channel modification layer of the aforementioned nanopore chip is configured such that the Zeta potential at the interface when immersed in an electrolyte is a negative potential (therefore, the electroosmotic channel modification layer can also be referred to as a negative potential film layer), thereby rendering the electrolyte in the electroosmotic channel positively charged, which then moves under the action of the electric field and drives the to-be-measured particles to flow from one chamber to the other through the micropores.

In an embodiment of the present application, the preparation method of the aforementioned nanopore chip includes: providing a substrate; forming a film on the first surface of the substrate, the film having at least one micropore; forming a cavity extending through the substrate from the second surface to the first surface, i.e., the electroosmotic channel, and forming an electroosmotic channel modification layer on the side wall of the electroosmotic channel; the electroosmotic channel modification layer is configured so that the Zeta potential at the interface when immersed in an electrolyte is a negative potential; wherein, the diameter of the micropores is smaller than the inner diameter of the electroosmotic channel, and the projections of all the micropores on the first surface are covered by the projection of the electroosmotic channel on the first surface.

In a fourth aspect of the present application, based on the device of the first aspect and the detection method of the second aspect, provided is an analysis method for low-density lipoprotein cholesterol (LDL-C), which includes:

1) Capturing and specially isolating LDL-C in the sample;
2) Recording and measuring the current or voltage pulse signal generated across the electrodes when the LDL-C obtained in step 1) passes through the micropores of the device of the first aspect, and analyzing the particle size distribution and particle concentration in each particle size range of LDL-C in the sample based on the pulse signal, wherein, the pore size of the micropores in the device is not greater than 200 nm, and the pore depth of the micropores is not greater than 150 nm.

In an embodiment of the present application, magnetic beads conjugated with antibodies or aptamers that specifically bind to the surface membrane protein of the to-be-measured LDL-C are used to specifically capture the LDL-C in the sample. After collecting the magnetic beads, the captured LDL-C is eluted with a dissociation solution, thereby separating the captured LDL-C from the magnetic beads.

Preferably, the magnetic beads are coated with an antibody against protein ApoB100.

Preferably, the dissociation solution contains trypsin, salicylic acid, glycine, or citric acid.

In a fifth aspect of the present application, based on the device of the first aspect and the detection method of the second aspect, provided is a method for tracing the particle concentration of small-sized nanoparticles. The aforementioned small-sized nanoparticles are nanoparticles with a particle size greater than or equal to 20 nm and less than or equal to 400 nm. The method includes designing several intermediate samples with unknown particle concentrations and particle sizes between the microparticle samples with known particle concentrations and the sample of to-be-measured small-sized nanoparticles, and sorting the microparticle samples, the first intermediate sample, the second intermediate sample, ..., the Nth intermediate sample, and the sample of to-be-measured small-sized nanoparticles in order of particle size from large to small, where N is a positive integer greater than or equal to 1; at the same time, the design of the intermediate samples meets the condition that the particle sizes of two adjacent sorted samples fall within the detection range of the device provided in the first aspect; the adjacent two samples are detected in the same device in the order of particle size from large to small, and the particle concentration of the sample with unknown particle concentration among the adjacent samples is calculated based on the detection parameter values (i.e., pulse signal frequencies) of the adjacent samples and the particle concentration of the sample with known particle concentration among the adjacent samples; and so on, the particle concentration of the sample of to-be-measured small-sized nanoparticles is finally obtained; wherein, the calculation formula for the particle concentration of the sample with unknown particle concentration among the adjacent samples is:

$$C_{unknown} = C_{known} \times P_{unknown} / P_{known} \quad \text{(Formula 1)}$$

Wherein, $C_{unknown}$ denotes the particle concentration of the sample with unknown particle concentration among the adjacent samples, $C_{known}$ denotes the particle concentration of the sample with known particle concentration in the adjacent samples, $P_{unknown}$ denotes the voltage/current pulse frequency for the sample with unknown particle concentration, and $P_{known}$ denotes the voltage/current pulse frequency for the sample with known particle concentration;

The aforementioned conditions include:

1) For each adjacent sample pair, the particle size of the sample with the larger particle size is less than or equal to 60% of the pore size of the micropores of the device;
2) For each adjacent sample pair, the baseline amplitude of the pulse signal of the sample with larger particle size is less than the peak amplitude of the pulse signal of the sample with smaller particle size;
3) The depth of the micropores of the device is less than or equal to the diameter and greater than or equal to one-tenth of the pore size of the micropores.

In a sixth aspect of the present application, provided is a method for calculating the Zeta potential of particles, by obtaining the detected electrical pulse signals of several particle samples with known particle sizes and Zeta potentials (which are obtained by measuring the particles in the samples passing through the micropores of the device provided in the first aspect of the present disclosure under the action of an electric field) and recording the pulse peak amplitude and pulse width of the electrical pulse signals, a calculation model for the particle Zeta potential is constructed based on the particle size of the particles, as well as the pulse peak amplitude and pulse width of their electrical pulse signals.

In an embodiment of the present application, constructing the particle Zeta potential calculation model based on the particle size, pulse peak amplitude, and pulse width of the electrical pulse signals of the particles includes: constructing a training sample set by taking the particle size, pulse peak amplitude, and pulse width of the electrical pulse signals of the particles as modeling factors together with the Zeta potential of the particles; performing several types of model training based on the training sample set, evaluating the trained models of several types, and confirming the optimal particle Zeta potential calculation model according to the model evaluation indicators.

In an embodiment of the present application, the aforementioned calculation method for the Zeta potential of particles includes:

1) obtaining detected electrical pulse signals of several known particle samples with different particle sizes but the same Zeta potential through the device disclosed in the first aspect of the present application, and recording the pulse peak amplitude and pulse width of the detected electrical pulse signals; obtaining the first relational expression based on the particle size of the particles and the pulse peak amplitude of their detected electrical pulse signals, the first relational expression being: $A = a \times D^3$, where A is the pulse peak amplitude of the particle, D is the particle size, and a is the particle size coefficient; obtaining the second relational expression based on the pulse peak amplitude and pulse width of the detected electrical pulse signal of the particles, the second relational expression being: $W = b \times A + Wn$, where A is the pulse peak amplitude of the particle, W is the pulse width of the particle, b is the pulse coefficient, and Wn is the pulse width correction coefficient.

2) obtaining detected electrical pulse signals of several known particle samples with the same particle size but different Zeta potentials through the device disclosed in the first aspect of the present application (the same device as in step 1), and recording the pulse width of their detected electrical pulse signals; obtaining the fourth relational expression based on the Zeta potential of the particles, the pulse width of their detected electrical pulse signals, the first relational expression, and the second relational expression, the fourth relational expression being: $Z = d \times (W - b \times A)^e$, where $Z$ is the absolute value of the Zeta potential of the particle, $W$ is the pulse width of the particle, $A$ is the pulse peak amplitude of the particle, $b$ is the pulse coefficient, $d$ is the potential coefficient, and $e$ is the potential index.

Furthermore, the Zeta potential of the to-be-measured particles can be achieved by using the aforementioned particle Zeta potential calculation model based on the device. In an embodiment of the present application, a detected electrical pulse signal of the to-be-measured particles when passing through the detection area under the action of the electric field is obtained through the micro/nano particle detection device provided in the first aspect of the present application; the pulse peak amplitude and pulse width of the obtained detected electrical pulse signal are input to the particle Zeta potential calculation model calculated by the aforementioned calculation method, and the Zeta potential of the to-be-measured particles can be obtained. In some specific embodiments, the particle Zeta potential calculation model is the aforementioned fourth relational expression.

Meanwhile, based on the aforementioned particle Zeta potential calculation model, the present application also provides a calculation device for the Zeta potential of to-be-measured particles, which includes: a signal acquisition module and a signal processing module. The signal acquisition module is configured to obtain detected electrical pulse signal of the to-be-measured particles when passing through the detection area of the micro/nano particle detection device provided in the first aspect of the present application, which includes the pulse peak amplitude and pulse width of the detected electrical pulse signals. The signal processing module is configured to input the obtained pulse peak amplitude and pulse width to the particle Zeta potential calculation model obtained by the aforementioned calculation method to obtain the Zeta potential of to-be-measured particles.

In a seventh aspect of the present application, provided is a device for measuring micro/nano particles, which includes: a sample chamber with a common electrode; at least two measurement chambers adjacent to the aforementioned sample chamber, including a first measurement chamber with a first measurement electrode and a second measurement chamber with a second measurement electrode; a substrate, such as a first substrate and a second substrate, configured to separate the sample chamber from the at least two measurement chambers; a film covering one side of the substrate, wherein the film on one side of the first substrate is a first film and the film on one side of the second substrate is a second film. Specifically, the first film has a first micropore and the second film has a second micropore. The substrate has a first electroosmotic channel and a second electroosmotic channel; specifically, the first substrate has a first electroosmotic channel and the second substrate has a second electroosmotic channel. The inner diameter of the first electroosmotic channel is larger than the pore size of the first micropore but smaller than the inner diameter of the first measurement chamber; the inner diameter of the second electroosmotic channel is larger than the pore size of the second micropore but smaller than the inner diameter of the second measurement chamber. The sample chamber is connected to the first measurement chamber through the first micropore and the first electroosmotic channel, and is also in communication with the second measurement chamber through the second micropore and the second electroosmotic channel. The inner wall of the first electroosmotic channel has a first electroosmotic channel modification layer, and the interface of the first electroosmotic channel modification layer with an electrolyte has a specific first Zeta potential. In addition, the inner wall of the second electroosmotic channel has a second electroosmotic channel modification layer, and the interface of the second electroosmotic channel modification layer with an electrolyte has a specific second Zeta potential.

It should be understood that the aforementioned general description and the detailed description below are merely exemplary and explanatory, and do not limit the application that the present application intends to protect.

**BRIEF DESCRIPTION OF DRAWINGS**

FIG. 1 shows a schematic structural diagram of the micro-nano particle measurement device disclosed in the present application;

FIG. 2 is a schematic structural diagram of a nanopore chip in an embodiment of the present application;

FIG. 3 is a schematic structural diagram of a device assembled from nanopore chips in an embodiment of the present application;

FIG. 4 is a schematic flow diagram of a manufacturing method provided in an embodiment of the present application;

FIG. 5 is a schematic process diagram (1) of the manufacturing method provided in an embodiment of the present application;

FIG. 6 is a schematic process diagram (2) of the manufacturing method provided in an embodiment of the present application;

FIG. 7 is a schematic process diagram (3) of the manufacturing method provided in an embodiment of the present application;

FIG. 8 is a schematic process diagram (4) of the manufacturing method provided in an embodiment of the present application;

FIG. 9 is a schematic process diagram (5) of the manufacturing method provided in an embodiment of the present application;

FIG. 10 is a schematic process diagram (6) of the manufacturing method provided in an embodiment of the present application;

FIG. 11 is a schematic diagram (1) of pulse signals of to-be-measured particles provided in an embodiment of the present application;

FIG. 12 is a schematic diagram (1) of pulse signals of standard particles provided in an embodiment of the present application;

FIG. 13 is a schematic diagram of the micro-nano particle measurement device used in Example 3;

FIG. 14A shows that the pulse signal width time of the to-be-measured silica microspheres tested in Example 3 is 0.2 mS;

FIG. 14B shows that the pulse signal width time of the 150 nm standard microsphere sample (average particle size 150 nm, concentration $3 \times 10^9$ particles/mL, average potential -30 mV) tested in Example 3 is 0.4 mS;

FIG. 15A shows the pulse signal of the electroosmotic channel with an inner diameter of 0.5 mm detected in Example 4;

FIG. 15B shows the pulse signal of the electroosmotic channel with an inner diameter of 1 mm detected in Example 4;

FIG. 15C shows the pulse signal of the electroosmotic channel with an inner diameter of 2 mm detected in Example 4;

FIG. 15D shows the pulse signal of the electroosmotic channel with an inner diameter of 3 mm detected in Example 4;

FIG. 15E shows the pulse signal of the electroosmotic channel with an inner diameter of 4 mm detected in Example 4;

FIG. 16A shows the pulse signal of the electroosmotic channel with a depth of 0.025 mm detected in Example 5;

FIG. 16B shows the pulse signal of the electroosmotic channel with a depth of 0.1 mm detected in Example 5;

FIG. 16C shows the pulse signal of the electroosmotic channel with a depth of 0.4 mm detected in Example 5;

FIG. 17 is a schematic diagram of a 200 nm nanopore measurement device in Example 6;

FIG. 18 is a bar chart of particle size and concentration of LDL-C particles in Example 6;

FIG. 19 is a schematic diagram of a 150 nm nanopore measurement device in Example 7;

FIG. 20 is a bar chart of particle size and concentration of LDL-C particles in Example 7;

FIG. 21 shows the original data pulse width and peak value collected from particles passing through the pore in a specific embodiment of the present application;

FIG. 22 is a linear fitting result diagram of W and A in Example 10 of the present application;

FIG. 23 is a linear fitting result diagram of A and $D^3$ in Example 10 of the present application;

FIG. 24 is a linear fitting result diagram of the absolute value of potential Z and Wn in Example 10 of the present application.

REFERENCE NUMERALS LIST

1 substrate;

2 film (microporous film);

3 electroosmotic channel modification layer (negative potential film layer);

4 transition layer;

5 protective layer;

101 electroosmotic channel;

201 micropore;

301 passivation layer;

100 nanopore chip;

200 measurement container;

310 first electrode;

320 second electrode.

DETAILED DESCRIPTION

The following provides a detailed description of the specific implementations of the present application. Although the present application discloses multiple aspects and implementations below, it will be apparent to those skilled in the art that various equivalent changes and modifications may be made without departing from the spirit and scope of the subject matter of the present application. The multiple aspects and implementations disclosed in the present application are for illustrative purposes only and are not intended to limit the present application; the actual protection scope of the present application shall be determined by the claims. Unless otherwise indicated, all technical and scientific terms used herein have the same meaning as commonly understood by those skilled in the art to which the present application belongs. All references, patents, and patent applications cited in the present application are incorporated herein by reference in their entirety.

## I. Structure of the Micro/Nano Particle Detection Device

The present application provides a device for detecting nanoparticles using the Nanocoulter technology. The Nanocoulter technology is based on the Nanocoulter principle. During measurement, particles to be detected are dispersed in an electrolyte and pass through a nanopore chip having a specific pore size. As a particle passes through a micropore (also referred to as a nanopore), it momentarily occupies a volume equivalent to its own, causing an instantaneous change in the resistance between the two electrodes inside and outside the pore (in a constant-current circuit) and thereby generating a potential pulse. The intensity and frequency of the pulse signal are proportional to the size and number of particles passing through the nanopore. Direct conversion of the pulse signal enables obtaining the particle size and particle count information of the detected sample.

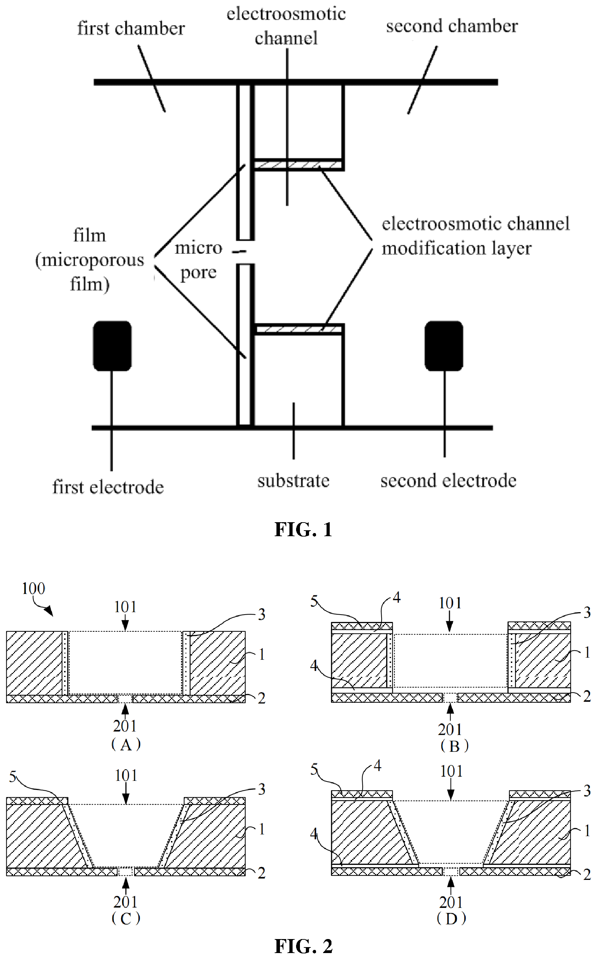

Based on the above principle, the present application provides a novel micro/nano particle detection device. By virtue of an electroosmotic channel modification layer disposed on an electroosmotic channel, the device can drive micro/nano particles through a micropore to complete detection using only a potential difference between two electrodes, without requiring any additional external driving force. As shown in FIG. 1, which is a cross-sectional structural view of a device for detecting micro/nano particles according to an exemplary embodiment, the detection device comprises a first chamber provided with a first electrode, and a second chamber adjacent to the first chamber and provided with a second electrode. The first chamber and the second chamber are separated by a substrate. A film covers a side of the substrate facing the first chamber. The film is provided with at least one micropore. The substrate is provided with an electroosmotic channel, the inner diameter of which is larger than a pore size of the micropores but smaller than the inner diameter of the second chamber. The first chamber and the second chamber are in communication via the micropore and the electroosmotic channel. The inner wall of the electroosmotic channel is provided with an electroosmotic channel modification layer.

It should be particularly noted that the substrate (including the electroosmotic channel), the film (including the micropore), and the electroosmotic channel modification layer in the above-described device may together constitute a nanopore chip, the structure of which is shown in FIG.2.

## 1. Substrate, Film, and Electroosmotic Channel Modification Layer of the Micro/Nano Particle Detection Device (Nanopore Chip)

The structures and preparation methods of the various parts of the nanopore chip are described in detailed below. It should be understood that, as a part of the device, the following description of the nanopore chip and its related preparation methods provided also apply to the micro/nano particle detection device of the present application.

In some embodiments, the structure of the nanopore chip is as shown in FIG. 2(A). The nanopore chip 100 may include: a substrate 1, a film 2, and an electroosmotic channel modification layer 3. The substrate 1 has a first surface and a second surface opposite to each other. The substrate 1 is provided with a cavity extending through from the second surface to the first surface, which is the electroosmotic channel 101. The film 2 is formed on the first surface, and the film 2 is provided with at least one micropore 201. The pore size of the micropore 201 is smaller than the inner diameter of the electroosmotic channel 101, and the micropore 201 is in communication with the electroosmotic channel 101. Projections of all micropores 201 on the first surface are covered by the projection of the electroosmotic channel 101 on the first surface. The electroosmotic channel modification layer 3 is formed on the side wall of the electroosmotic channel 101. The interface of the electroosmotic channel modification layer 3 has a specific Zeta potential when in contact with an electrolyte. In one specific embodiment of the present application, the electroosmotic channel modification layer 3 is configured to have a negative Zeta potential at the interface when immersed in the electrolyte.

## 1.1 Substrate and Electroosmotic Channel

It should be understood that the substrate of the nanopore chip has a structure capable of separating the first chamber from the second chamber, and is made of a material on which a film covering the substrate can be grown. In some embodiments, the material forming the substrate is silicon (silicon substrate). In some embodiments, the material forming the substrate is boron nitride. In some embodiments, the thickness of the substrate ranges from 25 $\mu$m to 1 mm, for example, 25 $\mu$m, 50 $\mu$m, 75 $\mu$m, 100 $\mu$m, 150 $\mu$m, 200 $\mu$m, 250 $\mu$m, 300 $\mu$m, 350 $\mu$m, 400 $\mu$m, 450 $\mu$m, 500 $\mu$m, 550 $\mu$m, 600 $\mu$m, 650 $\mu$m, 700 $\mu$m, 750 $\mu$m, 800 $\mu$m, 850 $\mu$m, 900 $\mu$m, 950 $\mu$m, 1000 $\mu$m, or any value or range between any two of the above values. The thickness of the substrate described herein refers to a distance measured in a direction perpendicular to a direction along which the micro/nano particles move through the electroosmotic channel during measurement.

It should be understood that, based on the function of the electroosmotic channel, an inner diameter and a depth thereof should be configured such that they can generate an electrophoretic effect on the electrolyte within the channel. In some embodiments, the shape of the electroosmotic channel is selected from the group consisting of: a cylinder, a rectangular prism, a truncated cone, and a truncated pyramid.

In some embodiments, the inner diameter of the electroosmotic channel is less than or equal to 3 mm, preferably ranging from 25 $\mu$m to 3 mm, for example, 25 $\mu$m, 50 $\mu$m, 75 $\mu$m, 100 $\mu$m, 150 $\mu$m, 200 $\mu$m, 250 $\mu$m, 300 $\mu$m, 350 $\mu$m, 400 $\mu$m, 450 $\mu$m, 500 $\mu$m, 550 $\mu$m, 600 $\mu$m, 650 $\mu$m, 700 $\mu$m, 750 $\mu$m, 800 $\mu$m, 850 $\mu$m, 900 $\mu$m, 1000 $\mu$m, 1500 $\mu$m, 2000 $\mu$m, 2500 $\mu$m, 3000 $\mu$m, or any value or range between any two of the above values. The inner diameter of the electroosmotic channel described herein refers to a distance measured in a direction perpendicular to a direction along which the micro/nano particles move through the electroosmotic channel during measurement. When the shape of the electroosmotic channel is not parallel to the direction in which the micro/nano particles move through the device during measurement, for example, when the electroosmotic channel has a shape of a truncated cone or a truncated pyramid, the inner diameter refers to a maximum distance in the direction perpendicular to the direction along which the micro/nano particles move through the electroosmotic channel during measurement.

### 1.2 Film and Micropore

In some embodiments, the film covering the substrate is an insulating layer formed of polycrystalline, silicon nitride, silicon oxynitride, or silicon.

It should be understood that, based on the function of the micropore, the pore size and the pore depth thereof should be configured such that they enable detection of micro/nano particles to be detected via the Nanocoulter principle. In some embodiments, the pore size of the micropores ranges from 20 nm to 5 $\mu$m. In some embodiments, the pore size of the micropore is 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, 1 $\mu$m, 2 $\mu$m, 3 $\mu$m, 4 $\mu$m, 5 $\mu$m, or any value or range between any two of the above values. The pore size of the micropores described herein refers to a distance measured in a direction perpendicular to a direction along which the micro/nano particles move through the micropore during measurement. In some embodiments, the shape of the micropores is circular. When the shape of the micropore is not circular, the pore size of the micropore refers to a maximum distance in the direction perpendicular to the direction along which the micro/nano particles move through the micropore during measurement. In some embodiments, the depth of the micropores ranges from 20 nm to 5 $\mu$m. In some embodiments, the depth of the micropores is 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, 1 $\mu$m, 2 $\mu$m, 3 $\mu$m, 4 $\mu$m, 5 $\mu$m, or any value or range between any two of the above values. In some embodiments, the depth of the micropores is determined by the thickness of the film covering the substrate. The depth of the micropore or the thickness of the film described herein refers to a distance described in a direction along which the micro/nano particles move through the micropore during measurement.

### 1.3 Electroosmotic Channel Modification Layer

1.3.1 In some embodiments, the electroosmotic channel modification layer of the above-description device has an interface with a Zeta potential more negative than -20 mV when in contact with the electrolyte. In some specific embodiments, the material of the electroosmotic channel modification layer is selected from the group consisting of amorphous carbon, a carbon chain polymer, silicon oxide, silicon nitride, polycrystalline silicon, monocrystalline silicon, and an adsorption layer formed by absorption of anions thereon.

In some embodiments, the interface of the electroosmotic channel modification layer has a Zeta potential value of -65 $\pm$ 6 mV when in contact with the electrolyte.

1.3.2 In some embodiments, the interface of the electroosmotic channel modification layer has a Zeta potential with an absolute value not greater than 10 mV when in contact with the electrolyte. In some specific embodiments, the material of the electroosmotic channel modification layer is selected from the group consisting of titanium oxide, aluminum oxide, and magnesium oxide. In some embodiments, the interface of the electroosmotic channel modification layer has a Zeta potential value of 0 $\pm$ 3 mV when in contact with the electrolyte.

1.3.3 In some embodiments, the electroosmotic channel modification layer may also cover an interface between the film and the electroosmotic channel and the inner wall of the micropore.

### 1.4 Transition Layer and Protective Layer

In some embodiments, as shown in FIGS. 2(B) and 2(D), the nanopore chip 100 may further include a transition layer 4. The transition layer 4 is formed between the film 2 and the substrate 1, and has an opening (a hollow structure) or a through hole in communication with the micropore 201 and the electroosmotic channel 101. The transition layer 4 ensures communication between the micropore 201 and the electroosmotic channel 101. The transition layer 4 can be etched using the same mask as that for the electroosmotic channel 101, and the transition layer 4 located on the second surface can serve as a hard mask during etching of the electroosmotic channel 101.

In some embodiments, as shown in FIGS. 2(B) to 2(D), the nanopore chip 100 may further include a protective layer 5. The protective layer 5 is formed on the second surface and has an opening or a through hole in communication with the electroosmotic channel 101. The transition layer 4 may also be formed between the protective layer 5 and the substrate 1. The protective layer 5 located on the second surface can also serve as a hard mask during etching of the electroosmotic channel 101.

In other words, the transition layer 4 or the protective layer 5 can serve as a hard mask during the etching process for forming the micropore 201 or the electroosmotic channel 101, and has an opening or a through hole corresponding to upper and lower ports of the electroosmotic channel 101.

It should be understood that the transition layer and the protective layer in the above-described nanopore chip are applicable to electroosmotic channel modification layers of various materials. Meanwhile, the arrangement of the transition layer and the protective layer is also applicable to the micro/nano particle detection device of the present application.

### 1.5 Depth of Electroosmotic Channel and Depth of Micropore

It will be appreciated that, in some embodiments, the depth of the electroosmotic channel is determined by the thickness of the substrate. In some embodiments, the depth of the electroosmotic channel is at least five times the depth of the micropore. As shown in the embodiments of the present application, when the depth of the electroosmotic channel is less than five times the depth of the micropore, for example, four times or three times the depth of the micropore, a detected pulse frequency is very low. In some embodiments, the depth of the electroosmotic channel is five times, six times, seven times, eight times, nine times, ten times or more of ten times the depth of the micropore.

### 1.6 Fabrication Method

The following content regarding the fabrication method is described by way of examples using the fabrication of a nanopore chip, and the fabrication method described below is also applicable to the micro/nano particle detection device.

A method for fabricating a nanopore chip comprises: providing a substrate; forming a film on a first surface of the substrate, the film having at least one micropore; forming, on the second surface of the substrate, a cavity extending through to the first surface, i.e., an electroosmotic channel, and forming an electroosmotic channel modification layer on the side wall of the electroosmotic channel, wherein the electroosmotic channel modification layer is configured to have a negative Zeta potential at the interface thereof when immersed in an electrolyte; and wherein the pore size of the micropore is smaller than the inner diameter of the electroosmotic channel, and projections of all micropores on the first surface are covered by a projection of the electroosmotic channel on the first surface.

The method for forming the electroosmotic channel modification layer may comprises adsorption, surface chemical modification, self-assembly, or the like.

In some embodiments, the electroosmotic channel modification layer is made of silicon oxide, silicon nitride, polycrystalline silicon, or monocrystalline silicon. During fabrication, after forming the electroosmotic channel modification layer of the aforementioned material on the inner wall of the electroosmotic channel of the substrate, the layer is immersed in an aqueous solution containing anions to adsorb anions. The aqueous solution containing anions may be an alkaline salt solution, a phosphate solution, or a HEPES solution, for example, an aqueous NaCl solution, an aqueous NaOH solution, an aqueous PBS solution, an aqueous sodium phosphate solution, or an aqueous sodium perchlorate solution. For example, a silicon nitride layer is deposited on the inner wall of the electroosmotic channel, and then the silicon nitride layer is immersed in an aqueous sodium perchlorate solution to adsorb anions, after which it can serve as the electroosmotic channel modification layer.

In some embodiments, the electroosmotic channel modification layer is made of titanium oxide, aluminum oxide, or magnesium oxide. For example, a silicon dioxide layer is deposited on the inner wall of the electroosmotic channel to serve as the electroosmotic channel modification layer.

It should be particularly noted that, as shown in FIG. 2, in some embodiments, the electroosmotic channel modification layer may be an amorphous carbon layer or a carbon chain polymer layer. The carbon layer or carbon chain polymer layer may be formed by depositing carbon ions generated by ionization of a hydrocarbon or a fluorocarbon in a plasma. The hydrocarbon or fluorocarbon may form carbon ions after ionization, and the carbon ions may form an amorphous carbon layer or a carbon chain polymer layer. For example, a fluorocarbon (C4F8) in a plasma may be used to passivate side walls of the electroosmotic channel 101. C4F8 decomposes into ionic $CF_{+x}$ groups, $CF_{-x}$ groups and active $F_-$ groups in the plasma state. The $CF_{+x}$ and $CF_{-x}$ groups react with the silicon surface to form a $(CF_2)_n$ polymer

passivation film, where (CF2)n long chains are a fluorocarbon polymer and a type of carbon chain polymer. As another example, the amorphous carbon layer may be formed by thermal decomposition or plasma deposition of a hydrocarbon gas (e.g., methane, ethylene). Carbon atoms or carbon ions generated by ionization of the hydrocarbon gas in the plasma are then deposited on the first surface of the substrate 1 to form an amorphous carbon layer.

Further, in some embodiments, when the electroosmotic channel modification layer is an amorphous carbon layer or a carbon chain polymer layer, the electroosmotic channel modification layer is formed after the electroosmotic channel. In the fabrication method, the substrate is first patterned by wet etching to form, on the second surface of the substrate, the electroosmotic channel extending through to the first surface; then, side walls of the electroosmotic channel are passivated using a hydrocarbon or fluorocarbon plasma to form an amorphous carbon layer or a carbon chain polymer layer as the electroosmotic channel modification layer.

In addition, in some embodiments, when the electroosmotic channel modification layer is an amorphous carbon layer or a carbon chain polymer layer, the electroosmotic channel modification layer is formed during formation of the electroosmotic channel. The fabrication method includes: performing an etching step comprising patterning the substrate by dry etching to form a recess having a first depth in the second surface of the substrate, wherein the first depth is less than the thickness of the substrate; performing a passivation step comprising passivating side walls of the recess using a hydrocarbon or fluorocarbon plasma to form an amorphous carbon layer or a carbon chain polymer layer as the electroosmotic channel modification layer; and repeating the etching step and the passivation step until the depth of the recess equals the thickness of the substrate, thereby forming the electroosmotic channel extending through to the first surface, with the electroosmotic channel modification layer formed on the side walls of the electroosmotic channel.

In some specific embodiments, the fluorocarbon is preferably octafluorocyclobutane.

In some specific embodiments, the nanopore chip is immersed in an alkaline salt solution, a phosphate solution or a HEPES solution.

## 2. Principles of the Micro/Nano Particle Detection Device

The basic structure of the micro/nano particle detection device of the present application is shown in FIG. 1. In some embodiments, the above-described device further includes an electrolyte disposed in the first chamber and the second chamber. Electrolytes suitable for the present application may be an alkaline salt solution, a phosphate solution, or a HEPES solution, such as an aqueous NaCl solution, an aqueous NaOH solution, an aqueous PBS solution, an aqueous sodium phosphate solution, or an aqueous sodium perchlorate solution.

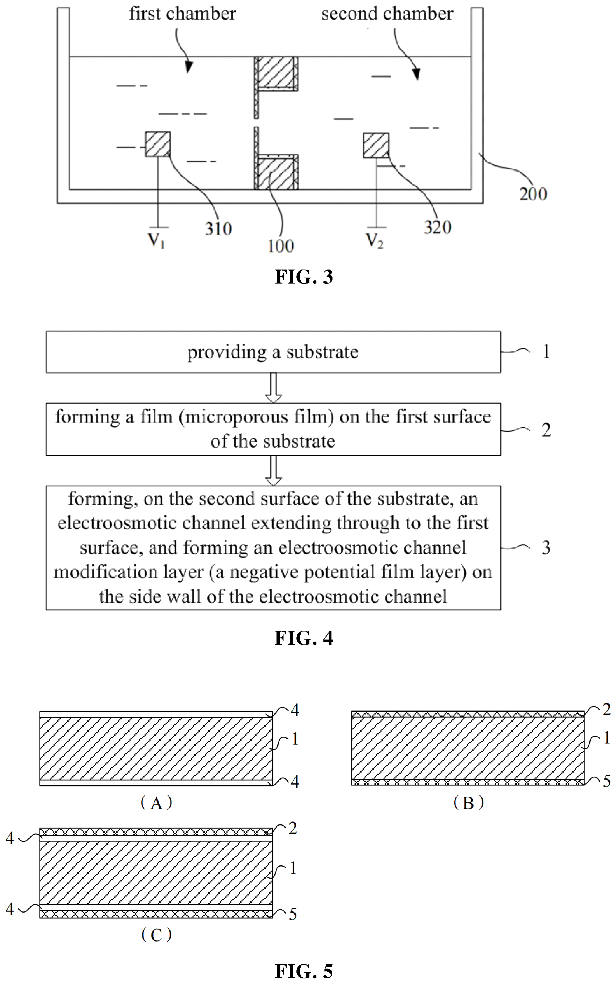

In some embodiments, the device may be assembled using a nanopore chip. For example, as shown in FIG. 3, an exemplary micro/nano particle detection device of the present application may include a measurement container 200, a first electrode 310, a second electrode 320, and the nanopore chip 100 described above. The nanopore chip 100 is configured to be vertically placed at the bottom of the measurement container 200 and immersed in the electrolyte, thereby dividing the measurement container 200 into a first chamber and a second chamber. Particles to be detected are placed in one of the first chamber and the second chamber. The measurement container 200 contains an electrolyte, which is an aqueous PBS solution.

In a measurement state, the first chamber, the electroosmotic channel, and the second chamber are filled with the electrolyte, and the electrolyte in the first chamber or the second chamber contains the micro/nano particles to be detected. The micro/nano particles can pass through the electroosmotic channel and the micropore.

2.1 In some embodiments, the material of the electroosmotic channel modification layer is selected from the group consisting of amorphous carbon, a carbon chain polymer, silicon oxide, silicon nitride, polysilicon, monocrystalline silicon, and an adsorption layer formed by adsorption of anions thereon. In these embodiments, the interface of the electroosmotic channel modification layer has a Zeta potential more negative than -20 mV when in contact with an electrolyte. In some embodiments, the interface of the electroosmotic channel modification layer has a Zeta potential value of -65 ± 6 mV when in contact with the electrolyte. When the device is not in use, the electroosmotic channel modification layer may be stored in an aqueous phosphate solution to maintain a stable Zeta potential value at the interface, for example, in an aqueous PBS solution, an aqueous sodium phosphate solution, or other aqueous solutions containing phosphate anions. When the device is in use, the first chamber and the second chambers separated by the substrate, as well as the electroosmotic channel and the micropore, are filled with the electrolyte. At this time, the electroosmotic channel modification layer is negatively charged in the electrolyte. Due to the principle of electrical neutrality, the electrolyte in the electroosmotic channel becomes positively charged. When a voltage is applied between the first electrode and the second electrode, an electric field is formed in the electrolyte, and the positively charged electrolyte in the electroosmotic channel moves as a whole toward the first electrode or the second electrode under the influence of the electric field, thereby driving the liquid in the second chamber or the first chamber to replenish the electroosmotic channel, and further driving the micro/nano particles in the chamber to pass through the micropore. Thus, even without any other driving force between the first chamber and the second chamber, the micro/nano particles in the chamber can pass through the micropores through this mechanism.

In this case, the amplitude of a pulse signal generated when the micro/nano particles pass through the micropore is proportional to the volume of the particles and to the cube of a particle size of the particles. Meanwhile, the frequency of the pulse signals of the micro/nano particles detected by the device is proportional to the concentration of the micro/nano particles. Using this mechanism, in a subsequent detection method, the particle size and the volume of the particles to be detected can be confirmed by detecting, in the same device, standard microspheres (also referred to as particle standard reference materials) having a known particle size and a known concentration, together with the micro/nano particles to be detected.

2.2 In some embodiments, the material of the electroosmotic channel modification layer is selected from the group consisting of titanium oxide, aluminum oxide, and magnesium oxide. In these embodiments, the interface of the electroosmotic channel modification layer has a Zeta potential with an absolute value not greater than 10 mV when in contact with the electrolyte. In some embodiments, the interface of the electroosmotic channel modification layer has a Zeta potential value of $0 \pm 3$ mV when in contact with the electrolyte. When the device is not in use, the electroosmotic channel modification layer may be stored in a Tris solution to maintain a stable Zeta potential value at the interface. It may also be stored in a HEPES solution, an aqueous PBS solution, or other pH buffer solutions. When the device is in use, the first chamber and the second chamber separated by the substrate, as well as the electroosmotic channel and the micropore, are filled with an electrolyte. At this time, the electroosmotic channel modification layer is substantially uncharged in the electrolyte; the electrolyte in the electroosmotic channel is substantially charge-neutral, and the liquid in the electroosmotic channel substantially does not flow. When a voltage is applied between the first electrode and the second electrode (e.g., the first electrode is grounded and the second electrode is connected to a negative voltage), an electric field is formed in the electrolyte. Negatively charged particles in the electrolyte in all chambers move toward the first electrode under the influence of the electric field, and positively charged particles in the electrolyte in all chambers move toward the second electrode under the influence of the electric field. Thus, when negatively charged particles are presented in the second chamber, they will pass through the electroosmotic channel and then through the micropore under the influence of the electric field; when positively charged particles are presented in the first chamber, they will pass through the micropore under the influence of the electric field. Even without any other driving force between the first chamber and the second chamber, the micro/nano particles pass through the micropore via this mechanism.

Similarly, in this case, the amplitude of an electrical pulse signal generated when the micro/nano particles pass through the micropore is proportional to the particle volume of the particles and to the cube of the particle size of the particles. Meanwhile, the frequency of the electrical pulse signals of the micro/nano particles detected by the device is proportional to the concentration of the micro/nano particles. As in section 2.1, this mechanism can be used in a detection method to determine a particle size and a concentration of the micro/nano particles to be detected by detecting, in the same device, standard microspheres having a known particle size and a known concentration, together with the micro/nano particles to be detected.

Furthermore, under the above mechanism, a speed at which the particles pass through the micropore is not affected by liquid flow or other driving forces, and the particles moves only under the influence of the electric field. The speed at which the particles pass through the micropore is proportional to the Zeta potential of the particles, and a transit time of the particles through the micropore is inversely proportional to the Zeta potential of the particles. Thereafter, this mechanism can be used to determine the Zeta potential of the micro/nano particles.

2.3 In some embodiments, the above-described micro/nano particle detection device further includes a liquid driver configured to drive the flow of the electrolyte. In some cases, the liquid driver may be used in combination with the electroosmotic channel modification layer to achieve no flow or weak flow of the liquid in the micropore of the device. For example, when the electroosmotic channel modification layer employed has an interface with a Zeta potential having an absolute value greater than 10 mV upon contact with the electrolyte, a pressure drive may be applied between the first chamber and the second chamber to counteract the electroosmotic flow, such that the micro/nano particles to be detected pass through the micropore solely by traction of the electric field force or under dominance of the electric field.


**II. Detection Method for Micro/Nano Particles and Application Thereof**

In another aspect, the present application provides a method for detecting micro/nano particles using the Nanocoulter and electroosmosis principles, the method comprising:

1) placing micro/nano particles to be detected in the device disclosed in the present application;
2) applying a voltage or a current between the first electrode and the second electrode;
3) detecting a change in a current signal or a voltage signal at the electrodes; and
4) determining, based on the changes in the current signal or the voltage signal, at least one of a particle size, a concentration, or Zeta potential information of the micro/nano particles to be detected.


In some embodiments, the particle size of the micro/nano particles detected by the above method ranges from 1

nm to 2 μm, inclusive, for example, 1 nm, 2 nm, 3 nm, 4 nm, 5 nm, 6 nm, 7 nm, 8 nm, 9 nm, 10 nm, 15 nm, 20 nm, 25 nm, 30 nm, 35 nm, 40 nm, 45 nm, 50 nm, 60 nm, 70 nm, 80 nm, 90 nm, 100 nm, 150 nm, 200 nm, 250 nm, 300 nm, 350 nm, 400 nm, 450 nm, 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, 2000 nm, or any value or range between any two of the above values.

In some embodiments, the detection method further includes: using a standard microsphere having a known particle size and a known concentration to obtain a peak value and a frequency of an electrical pulse signal generated by the standard microsphere in the above-described device; detecting a peak value and a frequency of an electrical pulse signal generated by the micro/nano particles to be detected in the device; and obtaining the particle size and concentration of the micro/nano particles to be detected based on the ratio of the peak value and frequency of the electrical pulse signals of the micro/nano particles to be detected.

The above detection method can be used to detect certain micro/nano particles. For example, in a specific embodiment of the present application, the above-described device and detection method can be used to analyze LDL-C, thereby obtaining a particle size distribution of LDL-C in a sample and a particle concentration in each particle size range. The provided method specifically includes the following steps:

1) mixing a sample containing LDL-C particles to be detected with magnetic beads in a solution to allow specific binding thereof, wherein the magnetic beads are conjugated with an antibody or an aptamer capable of specifically binding to a surface membrane protein of the LDL-C particles to be detected, and wherein the antibody or aptamer can selectively bind to LDL-C particles among all lipoprotein particles; it should be understood that a function of the antibody or aptamer is to capture LDL-C particles, and in order to capture as many LDL-C particles as possible or to maintain a capture efficiency at a relatively high stable level, one or more antibodies or aptamers may be conjugated to the magnetic beads according to experimental conditions;

2) placing the mixture of the magnetic beads and the sample, with the LDL-C bound thereto, in a magnetic field, whereby the magnetic beads (including those bound with LDL-C particles) are magnetically retained in a local region of the magnetic field; then adding a wash solution to replace the mixture of the magnetic beads and the sample in the magnetic field region, thereby removing, from the sample, impurity particles having particle sizes similar to that of the LDL-C.

wherein the wash solution is a liquid free of particles that would interfere with particle detection, for example, a buffer such as Tris or phosphate, and is free of surfactants or contains a mild surfactant such as Tween-20, Triton X, or F68 at a concentration below its critical micelle concentration (CMC), so as not to generate micelle particles that would interfere with detection of target particles; this replacement process may be repeated multiple times, such that non-target particles in the sample are removed along with the replacement of the mixture, and a clear liquid in the magnetic field region contains only the magnetic beads (including those bound with LDL-C particles);

3) adding a dissociation solution to the clear liquid after the replacement, wherein the dissociation solution includes, but is not limited to, a protease such as trypsin, papain, or proteinase K; a suitable acidic or alkaline solutions such as NaOH, glycine, or citric acid, and a denaturant such as DTT, guanidine hydrochloride, and β-mercaptoethanol;

Specifically, the dissociation solution may be trypsin, salicylic acid, glycine, citric acid, or another solution capable of detaching the LDL-C particles from the magnetic beads, such that the LDL-C particles are dispersed into the mixed. The dissociation solution as described above is added to the magnetic beads bound with LDL-C particles and thoroughly mixed, followed by dissociation at 37°C for 30 minutes. After dissociation is complete, the solution is collected.

4) applying a magnetic force to the mixture obtained in step 3) to cause the magnetic beads to settle or aggregate in a local region,, and collecting a supernatant from a region outside the aggregated magnetic beads, whereby the magnetic beads are effectively separated from the LDL-C particles by removal of the supernatant, and the LDL-C particles, after being separated from the magnetic beads, return to a suspended state.

Further, this step may specifically include:

(i) separating, by magnetic adsorption, the magnetic beads from the supernatant containing the dissociated LDL-C particles; and

(ii) resuspending the magnetic beads in a small amount of fresh dissociation solution and mixing thoroughly to wash off remaining LDL-C particles adsorbed on the surfaces of the magnetic beads; combining this portion of the dissociation solution with the supernatant from step (i), and repeating the process twice, whereby the LDL-C particles return to a suspended state.

5) recording and measuring a current or voltage pulse signals generated at an electrode when LDL-C particles in the supernatant obtained in step 4) pass through the micropore. Specifically, the micro/nanoparticle detection device comprises a first chamber and a second chamber on opposite sides of the micropore, with an electrode disposed in each of the first chamber and the second chamber. The supernatant is added to the first chamber or the second chamber, and one of a voltage or a current is applied across the two electrodes. LDL-C particles in the sample then pass through the micropore, from the first chamber into the electroosmotic channel or from the second chamber through the electroosmotic channel and the micropore into the first chamber, thereby generating a current or voltage pulse at the electrodes. By measuring the electrical pulse signal, the particle size distribution of LDL-C particles in the sample and the particle concentration information within each particle size range are obtained. The particle size resolution of the nanopores suitable for the present application is preferably at a level of 2 nm. In this specific analytical application, the pore size of the micropore is not greater than 200nm, and the pore depth is not greater than 150 nm. It should be particularly noted that, based on the function of the micropore, the pore size and pore depth thereof should be configured on the premise that they can accommodate the lipoprotein. However, taking into account detection accuracy and other objectives, in some embodiments, the pore size of the micropore in step 5) is 200 nm or less, for example, from 100 nm to 200 nm. In some embodiments, the pore size of the micropore is 200 nm, 170 nm, 150 nm, 130 nm, 110 nm, 100 nm or any value or range between any two of these values. In some embodiments, the pore depth of the micropore is less than 150 nm. In some embodiments, the pore depth of the micropore is 150 nm, 120 nm, 90 nm, 70 nm, 50 nm, 30 nm or any value or range between any two of these values. In some embodiments, the pore size of the micropore is 150 nm and the pore depth is 100 nm.

As shown in Table 1 below, experimental results are presented showing the effect of micropores with different pore sizes and pore depths on the repeatability stability of the Nanocoulter technology applicable to the present application. The test data were obtained using a diluted sample of 30nm standard microspheres as the test sample, with the repeatability coefficient of variation (CV) of the concentration values from 10 tests serving as the judgment criterion.

Table 1. Experimental Comparison Data of Detection repeatability for the Same Diluted Standard Microsphere Sample Using Micropores with Different Pore Depths and Pore Sizes

|  | pore size 200nm | pore size 170nm | pore size 150nm | pore size 130nm | pore size 100nm |
|---|---|---|---|---|---|
| pore depth 150nm | 6.93% | 6.74% | 5.32% | 5.64% | 6.12% |
| pore depth 120nm | 6.64% | 5.54% | **4.65%** | 5.34% | 5.87% |
| pore depth 100nm | 7.31% | 5.29% | **3.23%** | **4.31%** | 5.12% |
| pore depth 70nm | 9.12% | 7.45% | 6.89% | 5.65% | 5.17% |
| pore depth 50nm | 11.23% | 10.31% | 8.45% | 7.34% | 6.46% |
| pore depth 30nm | 15.24% | 13.38% | 10.43% | 9.86% | 8.23% |

In subsequent examples of the present application, the lipoprotein concentration obtained in this embodiment was detected using Nanocoulter technology (in Example 6, the pore size of the nanopore was 200 nm and the pore depth was 150 nm; in Example 7, the pore size of the nanopore was 150 nm and the pore depth was 100 nm).

Furthermore, in specific embodiments of the present application, based on the above-described device and detection principle, traceability of the particle concentration value of small-sized nanoparticles can be further achieved. Regarding small-sized nanoparticles, since nanoparticles with a particle size of 400 nm and above can be detected by a direct detection method, the above traceability method is primarily directed to detection of small-sized nanoparticles, which refer to micro/nano particles having a particle size ranging from 20 nm to 400 nm. These micro/nano particles are extremely difficult to observe under an optical microscope due to the limitation imposed by the wavelength of visible light. For example, the particle size range of the small-sized nanoparticles in the present application includes, but is not limited to, 370 nm, 370 nm, 350 nm, 330 nm, 310 nm, 300 nm, 270 nm, 270 nm, 250 nm, 230 nm, 210 nm, 200 nm, 170 nm, 170 nm, 150 nm, 130 nm, 110 nm, 100 nm, 90 nm, 80 nm, 70 nm, 60 nm, 50 nm, 40 nm, 30 nm, and 20 nm. **In** this traceability method, a particle sample having a known particle concentration value is a particle standard reference material, which refers to a particle standard (also referred to as a standard microsphere) having a known particle concentration and usable for calibration and verification, providing a reliable reference and calibration basis for scientific research and industrial applications in related fields. The height of a pulse signal refers to a peak value of the pulse signal. Regarding a baseline amplitude of the pulse signal, it should be noted that, due to interference from background noise in the generated pulse signal, an amplitude of such noise is defined as the baseline amplitude of the pulse signal in the present application. Those skilled in the art will appreciate that when the height of an effective signal is comparable to the baseline amplitude, the effective signal will be submerged in the baseline. Therefore, in the present application, the height of a voltage or current pulse signal of a sample having a smaller particle size needs to be higher than the baseline amplitude of a voltage or current pulse signal of a sample having a larger particle size. It should be understood that when a liquid flow passes through the micropore at a stable flow rate, the higher the particle concentration, the higher the number of pulses generated in the electrical signal per unit time. Thus, a pulse frequency per unit time is proportional to the particle concentration. Taking an electrical signal of a 5μm latex microsphere standard as an example, when it is detected in a micropore particle detection device having a micropore diameter of 10μm, the amplitude of the baseline noise is approximately 100 (arbitrary units). The smaller the particle size of the nanoparticles, the lower the amplitude of the generated electrical signal. If the height of a pulse signal generated by a sample to be tested is less than 100 (for example, after testing, the particle size corresponding to this pulse signal in the micro/nano particle detection device is approximately 800 nm), the pulse signal is then comparable to the noise, making it difficult to clearly distinguish the real particle signal from the noise. In this case, the particle size (800nm) is the lower detection limit for particle size that can be measured together with the 5μm latex microsphere standard. Further research has also found that approximately 60% of the pore size of the micropore of the detection device is roughly the upper limit of the particle detection size range. At the same time, it should be understood that, since the detection range of the micropore of a specific micro/nano particle detection device is limited, particles with a large difference in particle size are difficult to be detected in the same micro/nano particle detection device. Therefore, through a progressive approach in the traceability method of the present application, particularly by using particle standard reference materials in conjunction with micro/nano particle detection devices having different detection ranges to perform layer-by-layer calibration of intermediate samples, the particle concentration value of the sample to be tested can be ultimately determined. This traceability method has extremely high accuracy and enables accurate traceability. In the above traceability method, the device employed includes a micropore and an electroosmotic channel connected thereto. The inner wall of the electroosmotic channel includes an electroosmotic channel modification layer, and the interface of the electroosmotic channel modification layer, when in contact with an electrolyte, has a negative Zeta potential. Preferably, the electroosmotic channel modification layer is a silica dioxide layer or a silicon nitride layer. In a specific embodiment, two adjacent samples are each detected using the same device.

In some embodiments, for example, in the detection methods corresponding to the mechanisms described in Sections 2.2 and 2.3, the method includes: using a standard microsphere having a known particle size, a known concentration, and a known potential to obtain a peak value, a frequency, and a pulse width of an electrical pulse signal generated by the standard microsphere in the above-described device; detecting a peak value, a frequency, and a pulse width of an electrical pulse signal generated by the micro/nano particles to be detected in the device; and obtaining a particle size, a concentration, and a Zeta potential of the micro/nano particles to be detected based on a ratio of the peak value, the frequency, and the pulse width of the electrical pulse signal of the standard microsphere to the peak value, the frequency, and the pulse width of the electrical pulse signal of the micro/nano particles to be detected.

It should be particularly noted that, based on the mechanisms mentioned in Sections 2.2 and 2.3, direct calculation of the Zeta potential of micro/nano particles can also be achieved. Specifically, the Zeta potential of micro/nano particles is calculated using an electrical pulse signal generated when the particles pass through the micropores of the micro/nano particle detection device provided in the present application, wherein the particles are driven solely by, or predominantly by, an electric field force. The electrical pulse signal may be a voltage signal or a current signal, and the specific form of the signal does not constitute a limitation to the present application. It should be understood that, under the above mechanism, a velocity at which the particles pass through the micropore is not affected by liquid flow or other driving forces, and the particles move only under the dominant influence of the electric field force. In this case, the velocity at which the particles pass through the micropore is directly proportional to the Zeta potential of the particles, and a transit time of the particles through the micropore is inversely proportional to the Zeta potential of the particles. The transit velocity and transit time described above are closely related to the pulse width in the electrical pulse signal of the particles. Through experiments, the present application has also found that the inverse proportionality between transit time and the particle Zeta potential holds true for particles having the same particle size but different potentials; however, this relationship does not hold completely for sample particles having different particle sizes and different potentials. **In** fact, the particle size affects the pulse height (i.e., the pulse peak value) of the collected pulse signal. Meanwhile, for particles of different sizes, a viscous resistance exerted by the liquid inside the micropore during transit varies accordingly. Therefore, when calculating the particle Zeta potential based on the transit time, it is necessary to correct the calculation result by incorporating particle size information, which is closely related to the pulse peak value of the electrical pulse signal of the particles. Based on the above research results, particularly the correlations obtained therefrom, when a particle detection device is used to detect particles, a particle Zeta potential calculation model for the device can be constructed using a pulse width and a pulse peak value of an electrical pulse signal of particles having known particle size and known Zeta potentials. It should be understood herein that the selection of different electrolytes in the particle detection device will affect the viscous resistance during particle transit; However, this effect is consistent for all particles when the same electrolyte is used in experiments. Thus, correlations of Zeta potential obtained from measurement using different electrolytes may vary to a certain extent, and those skilled in the art may make appropriate adjustments according to the electrolyte selected. Specifically, in the present application, constructing a particle Zeta potential calculation model based on the particle size and the pulse peak value and the pulse width of the electrical pulse signal of the particles can be achieved by the following approach. Using, as modeling factors, the particle size, the pulse peak value, and the pulse width of the electrical pulse signal of particles having known particle sizes and known Zeta potentials, a training sample set is constructed in combination with the Zeta potentials of the particles. Using the same particle detection device, several types of model training are performed on the training sample set, and the trained models of the several types are then evaluated. An optimal particle Zeta potential calculation model is determined based on model evaluation metrics.

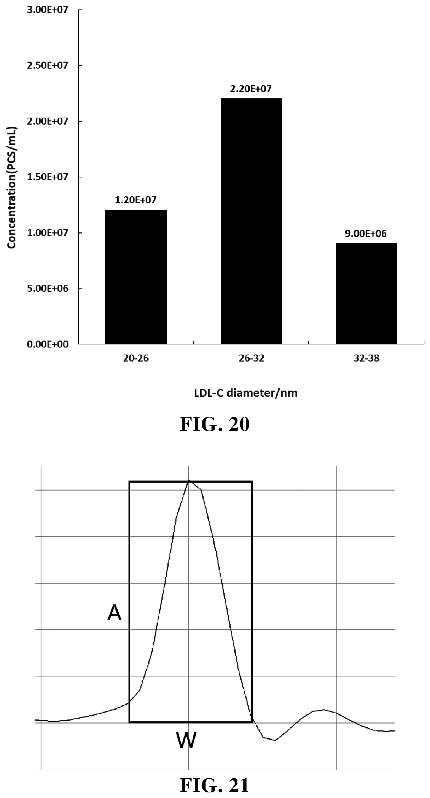

It should be understood that in actual Zeta potential measurement, when samples having the same Zeta potential but different particle sizes are introduced, and as particles of different sizes pass through the micropore (as shown in FIG. 21, which shows raw data of pulse width and peak value collected from particles during micropore transit), a correlation between the pulse peak value A of the particles and particle size information is first analyzed. Then, by analyzing the pulse peak value $A$ and the pulse width $W$, a corrected relationship between $W$ and $A$ is obtained. Based on the obtained corrected relationship, when detecting a sample to be measured, the pulse width deviation caused inconsistent particle sizes can be corrected using this relationship, and then Zeta potential information of a single particle can be obtained via a single-particle potential calculation equation. As described above, in a specific embodiment of the present application, the calculation method provided herein specifically includes:

1) obtaining detected pulse signals from a plurality of known particle samples having different particle sizes and the same Zeta potential, and recording a pulse peak value and a pulse width of each detected electrical pulse signals;

(1) obtaining a first relational expression for a relationship between particle size and pulse peak value based on the particle sizes of the known particles and the pulse peak values of the detected electrical pulse signals thereof, this first relational expression being: $A = a \times D^3$, where $A$ denotes the pulse peak value of a particle, $D$ denotes the particle size of the particle, and $a$ denotes a particle size coefficient. It can be concluded from the first relational expression that the pulse peak value of a particle is linearly related to the cube of its particle size.

(2) obtaining a second relational expression for a relationship between pulse width and pulse peak value based on the pulse peak values and pulse widths of the detected electrical pulse signals of the particles, the second relational expression being: $W = b \times A + Wn$, where $A$ denotes the pulse peak value of a particle, $W$ denotes the pulse width of the particle, $b$ denotes a pulse coefficient, and $Wn$ denotes a pulse width correction coefficient. It can be concluded from the second relational expression that the pulse width of a particle is linearly related to its pulse peak value. It should be understood that, since the particle in the detected electrical pulse signals have different particle sizes but the same Zeta potential, $Wn$ in the second relational expression obtained from particle samples having different particle sizes but the same Zeta potential is related only to the Zeta potential of the particles.

2) obtaining detected electrical pulse signals from a plurality of known particle samples having the same particle size and different Zeta potentials, and recording a pulse width of each detected electrical pulse signal; it should be understood from the analysis of the second relational expression that $Wn$ is related only to the Zeta potential of a particle; therefore, by selecting known particle samples having the same particle size and different Zeta potentials, a relationship between $Wn$ and different Zeta potentials can be obtained, which can be expressed as: $Z = d \times (Wn)^e$. Specifically, based on the Zeta potentials of the particles and the pulse widths of the detected electrical pulse signals thereof, in combination with the first and second relational expressions, a fourth relational expression for a relationship between the Zeta potential of a particle and the pulse peak value and the pulse width of the detected electrical pulse signal thereof is obtained,, the fourth relational expression being: $Z = d \times (W - b \times A)^e$, where $Z$ denotes the absolute value of the Zeta potential of a particle, $W$ denotes the pulse width of the particle, $A$ denotes the pulse peak value of the particle, $b$ denotes the pulse coefficient, $d$ denotes a potential coefficient, and $e$ denotes a potential index. Thus, in the present application, the pulse peak value $A$ is introduced to eliminate the influence of particle size on Zeta potential.

It should be understood that, for a specific micro/nano particle detection device, based on the fourth relational expression obtained above, unknown particles can be detected using the device to obtain a detected electrical pulse signal generated when the particle to be measured passes through a detection region under the influence of an electric field force. By substituting a pulse peak value and a pulse width of the electrical pulse signal from the detection result into the fourth relational expression, the Zeta potential of the particle to be measured can be obtained. Thus, in this case, the Zeta potential of the particle can be directly measured and calculated without relying on other standard particles, making the method more direct and reliable.

In a specific embodiment of the present application, a preferred electroosmotic channel modification layer of the micro/nano particle detection device, suitable for obtaining and applying of the above Zeta potential calculation model, is a silicon dioxide layer or a silicon nitride layer. The interface of the electroosmotic channel modification layer of the device has a Zeta potential with an absolute value not greater than 10 mV when in contact with an electrolyte. Alternatively, when the interface of the electroosmotic channel modification layer has a Zeta potential with an absolute value greater than 10 mV when in contact with the electrolyte, a pressure drive may be applied between the first chamber and the second chamber of the device, wherein the pressure drive is configured to counteract an electroosmotic flow such that the particles pass through the micropore by traction of an electric field force.

Meanwhile, in addition to the specific embodiments described in detail above, those skilled in the art, after reading the present application, may adopt other specific calculation or construction methods to implement a particle Zeta potential calculation model based on a pulse peak value and a pulse width of an electrical pulse signal, in accordance with the principles and design concepts disclosed in the present application.

### III. Device Extensions

On the other hand, as an extension, the present application provides a device for detecting micro/nano particles using a plurality of micropores and measurement chambers The device includes a sample chamber provided with a common electrode, and at least two measurement chambers adjacent to the sample chamber, the at least two measurement chambers including a first measurement chamber provided with a first measurement electrode and a second measurement chamber provided with a second measurement electrode. The sample chamber and the at least two measurement chambers are separated by a substrate, and a film covers a side of the substrate. The film is provided with at least a first micropore and a second micropore. The substrate is provided with a first electroosmotic channel and a second electroosmotic channel, wherein the inner diameter of the first electroosmotic channel is larger than the pore size of the first micropore and smaller than the inner diameter of the first measurement chamber, and the inner diameter of the second electroosmotic channel is larger than the pore size of the second micropore and smaller than the inner diameter of the second measurement chamber. The sample chamber is in communication with the first measurement chamber via the first micropore and the first electroosmotic channel. The sample chamber is in communication with the second measurement chamber via the second micropore and the second electroosmotic channel. The inner wall of the first electroosmotic channel is provided with a first electroosmotic channel modification layer, wherein the interface of the first electroosmotic channel modification layer has a specific first Zeta potential when in contact with an electrolyte. The inner wall of the second electroosmotic channel is provided with a second electroosmotic channel modification layer, wherein the interface of the second electroosmotic channel modification layer has a specific second Zeta potential when in contact with an electrolyte.

It will be appreciated that the sample chamber and measurement chambers described herein may have the features of the first chamber and the second chamber described above. The substrate, the film, the first micropore, the second micropore, the first electroosmotic channel, the second electroosmotic channel, the first electroosmotic channel modification layer, and the second electroosmotic channel modification layer described herein may have the features of the substrate, the film, the micropores, the electroosmotic channels, and the electroosmotic channel modification layers described above.

It will be appreciated that the pore size of the first micropore and the pore size of the second micropore described herein may be different. The inner diameter of the first electroosmotic channel and the inner diameter of the second electroosmotic channel may be the same or different.

It will be appreciated that the film described herein may cover a sample chamber side of the substrate or a measurement chamber side of the substrate. When the film covers the sample chamber side of the substrate, the sample chamber and the measurement chambers are in communication sequentially via the micropores and the electroosmotic channels. When the film covers the measurement chamber side of the substrate, the sample chamber and the measurement chambers are in communication sequentially via the electroosmotic channels and the micropores.

It will be appreciated that the first electroosmotic channel modification layer and the second electroosmotic channel modification layer described herein may be the same or different.

The present application will be described in further detail below through specific embodiments with reference to the accompanying drawings.

Example 1

As shown in FIG. 3, an embodiment of the present application provides a method for fabricating a nanopore chip 100, which can be used to fabricate the nanopore chip 100 shown in FIG. 2. The fabricating method may include:
Step 1: providing a substrate 1. In the present application, the substrate 1 serves as a support layer for a film 2 on one hand, and on the other hand, the side wall of the electroosmotic channel 101 of the substrate 1 is used for deposition of an electroosmotic channel modification layer 3. The material of the substrate 1 is not limited in the present application. The present application is described by taking a substantially silicon wafer as an example, which does not exclude usability of other substrates.

For example, a double-sided polished silicon wafer is provided as the substrate 1, having a thickness of 0.5 mm.

In some embodiments, after Step 1, the method may further include:
Step 100: forming a transition layer 4 on both sides of the substrate 1, as shown in (A) and (C) of FIG. 5, wherein the transition layer 4 is an insulating film layer.

The transition layer 4 may be silicon dioxide or another insulating material. When the substrate 1 is a silicon substrate, a silicon dioxide layer having a thickness of 1 μm may be formed on a first surface and a second surface of the substrate 1 by thermal oxidation to serve as the transition layer 4. The transition layer 4 is formed at least between the film 2 and the substrate 1.

Alternatively, the transition layer 4 may also be formed by physical vapor deposition or chemical vapor deposition. In this case, the transition layer 4 may be formed on the first surface, or on both the first surface and the second surface.

Step 2: forming a film 2 on the first surface of the substrate 1, wherein the film 2 is provided with at least one micropore 201.

Step 2 above may include:

Step 200: depositing an insulating film layer on the first surface of the substrate 1 to serve as the film 2, as shown in (B) and (C) of FIG. 5.

When the transition layer 4 is formed on the first surface of the substrate 1, an insulating film layer is formed on the transition layer 4 on the first surface to serve as the film 2.

For example, as shown in (C) of FIG. 5, a silicon nitride layer of about 500 nm is deposited on each of the two transition layers 4 by low-pressure chemical vapor deposition (LPCVD), with one layer serving as the film 2 and the other layer serving as a protective layer 5.

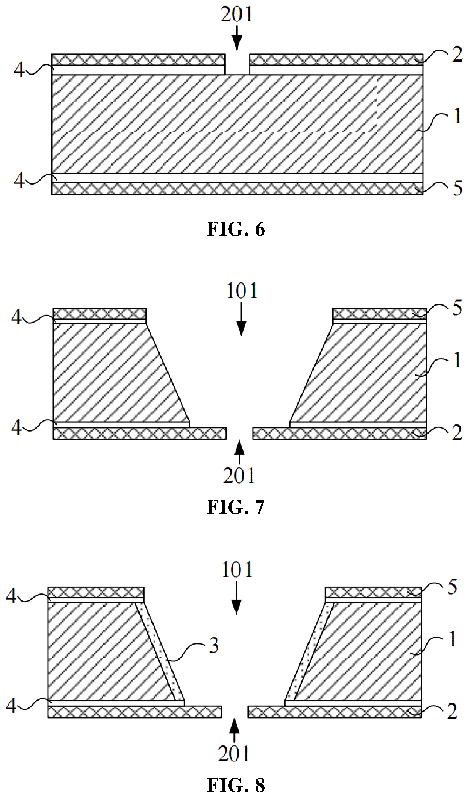

Step 210: patterning the film 2 to form at least one micropore 201, as shown in FIG. 6, wherein the pore size of the micropore 201 is larger than the particle size of particles to be detected. Generally, the particle size of the particles to be detected is at a nanometer scale, and the pore size of the micropore 201 may correspondingly be at a micrometer scale.

Step 3: forming, on the second surface of the substrate 1, an electroosmotic channel 101 extending through to the first surface, as shown in FIG. 2, FIG. 8 and FIG. 9, and forming an electroosmotic channel modification layer 3 on the side wall of the electroosmotic channel 101, wherein the electroosmotic channel modification layer 3 is configured to have a negative Zeta potential at the interface thereof when immersed in an electrolyte.

The pore size of the micropore 201 is smaller than the inner diameter of the electroosmotic channel 101, and projections of all micropores 201 on the first surface are covered by a projection of the electroosmotic channel 101 on the first surface. The electroosmotic channel modification layer 3 may be formed after formation of the electroosmotic channel 101; alternatively, the electroosmotic channel modification layer 3 may be formed during formation of the electroosmotic channel 101.

The embodiment of the present application focuses on forming the electroosmotic channel modification layer 3 on the side wall of the electroosmotic channel 101, and that the Zeta potential at the interface of the electroosmotic channel modification layer 3 when immersed in an electrolyte is a negative potential. A specific manner of forming the electroosmotic channel modification layer 3 is not limited, and a specific material of the electroosmotic channel modification layer 3 is also not limited.

In some embodiments, the electroosmotic channel modification layer 3 may be an amorphous carbon layer or a carbon chain polymer layer, and the electroosmotic channel modification layer 3 is formed after formation of the electroosmotic channel 101.

In Step 3 above, forming the electroosmotic channel 101 extending through the substrate 1 from the second surface to the first surface may include:

Step 301: patterning the substrate 1 by wet etching, as shown in FIG. 7, etching the protective layer 5 and the transition layer 4 (if present) on the second surface, and then etching the substrate 1, thereby forming the electroosmotic channel 101 extending through the substrate 1 from the second surface to the first surface. The transition layer 4 can prevent the film 2 from being etched, ensuring integrity of the film 2.

For example, the silicon substrate may be etched using KOH, followed by etching of the silicon oxide layer (transition layer 4) and the silicon nitride layer (film 2) on the first surface using a BOE etchant.

In Step 3 above, forming the electroosmotic channel modification layer 3 on the side wall of the electroosmotic channel 101 may include:

Step 302: passivating the side wall of the electroosmotic channel 101 with a hydrocarbon or fluorocarbon plasma to form an amorphous carbon layer or a carbon-chain polymer layer as the electroosmotic channel modification layer 3.

For example, the silicon substrate is placed in a reaction chamber with $C_4F_8$ plasma, so as to form an amorphous carbon layer or a carbon-chain polymer layer on the side wall of the electroosmotic channel 101 as the electroosmotic channel modification layer 3.

Step 4: dicing the substrate 1 to obtain a plurality of nanopore chips 100.

Step 5: immersing the nanopore chip 100 in an alkaline salt solution, a phosphate solution, or a HEPES solution.

For example, the silicon wafer is diced by laser cutting to obtain a plurality of chips each having a size of 10 mm × 10 mm.

In some embodiments, the electroosmotic channel modification layer 3 may be an amorphous carbon layer or a carbon chain polymer layer, and the electroosmotic channel modification layer 3 is formed during formation of the electroosmotic channel 101.

In Step 3 above, forming the electroosmotic channel 101 extending through the substrate 1 from the second surface to the first surface, and forming the electroosmotic channel modification layer 3 on the side wall of the electroosmotic channel 101, may include:

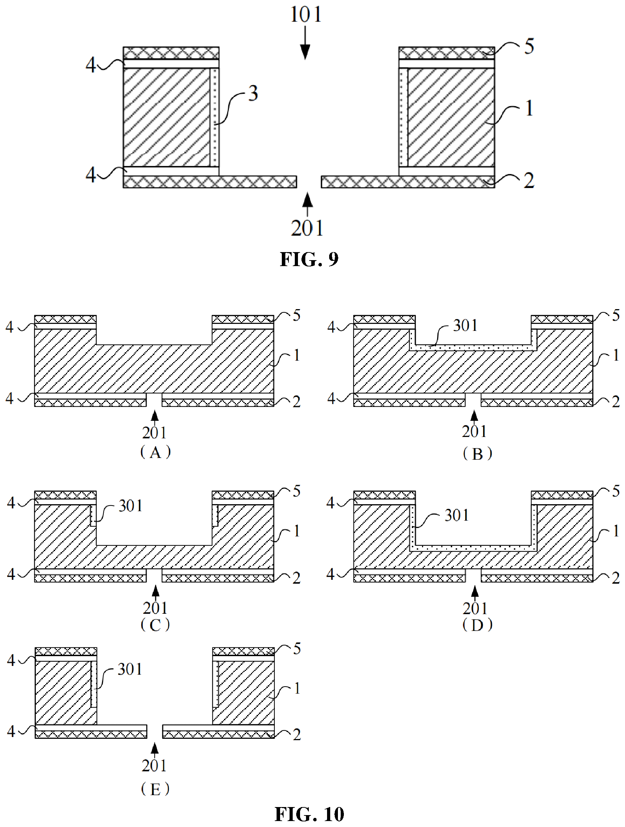

an etching step: patterning the substrate 1 by dry etching, as shown in (A) of FIG. 10, to form a recess having a first depth in the second surface of the substrate 1, wherein the first depth is less than the thickness of the substrate 1.

a passivation step: passivating the side wall of the recess with a hydrocarbon or fluorocarbon plasma, as shown in (B) of FIG. 10, to form an amorphous carbon layer or a carbon chain polymer layer as the electroosmotic channel modification layer 3, wherein at this stage the electroosmotic channel modification layer 3 is not yet fully formed, and the electroosmotic channel modification layer 3 in this state is defined as a passivation layer 301.

repeating the etching step and the passivation step, as shown in (C) to (E) of FIG. 10 and FIG. 9, until the depth of the recess equals the thickness of the substrate 1, thereby forming the electroosmotic channel 101 extending through to the first surface, with the electroosmotic channel modification layer 3 formed on the side wall of the electroosmotic channel 101.

For example, the silicon substrate is dry etched with SF6 plasma. An exposed side wall is then passivated with C4F8 plasma. As the recess deepens, the length of the passivation layer 301 on the side wall also increases until it is fully deposited on the side wall, forming the electroosmotic channel modification layer 3.

The number of repetitions of the etching step is not limited; alternatively, the first depth etched in each etching step may be different. The recess is continuously etched and deepened to form the final electroosmotic channel 101, with an objective of forming the electroosmotic channel modification layer 3 on the side wall of the electroosmotic channel 101.

Example 2

Corresponding to the preparation method in Example 1, a nanopore chip 100 may be fabricated by the following steps.

1. depositing a silicon nitride layer of about 30 nm on both sides of a double-side polished 4-inch silicon wafer (substrate 1) having a thickness of 0.5 mm by low-pressure chemical vapor deposition (LPCVD) , wherein the silicon nitride layer serves as the film 2 and the protective layer 5;

2. spin-coating a photoresist on the wafer, and exposing a circular pattern having a diameter of 20 nm to be etched on the photoresist via a photolithography process, with a 5 mm $\times$ 5 mm area as a unit region; etching the silicon nitride in the exposed region by reactive ion etching (RIE) to form circular holes of 20 nm in diameter (micropores 201);

3. removing the photoresist on the front side of the wafer, and coating a photoresist on the back side of the wafer; forming, on the photoresist on the back side at a position corresponding to the circular holes, a 2 mm $\times$ 2 mm back cavity release pattern for the silicon substrate via exposure and development; etching the silicon nitride by reactive ion etching (RIE), and then removing the photoresist on the back side of the wafer;

releasing the silicon by dry etching to form the electroosmotic channel 101 and a self-supporting $SiN_x$ suspended film, wherein the dry etching method is performed by: etching the silicon exposed in the opening region using an etching gas $SF_6$ in a plasma; and then performing passivation by reaction in a $C_4F_8$ (octafluorocyclobutane) plasma, wherein $C_4F_8$ can form a carbon layer or a carbon chain polymer (electroosmotic channel modification layer 3) after reaction, which deposits on a silicon surface and prevents reaction between fluorine ions and silicon; performing physical sputtering bombardment in a depth direction to remove the carbon layer or carbon chain polymer in the depth direction, while the carbon layer or carbon chain polymer on the side walls is retained, thereby exposing silicon in the depth direction for further etching; and achieving dry deep silicon etching through such periodic "etch-passivation-etch" cycles;

4. dicing the silicon wafer by laser cutting into single chips each having a size of 5 mm $\times$ 5 mm;

5. immersing the single chips in a 3 mol/L NaOH aqueous solution for 2 hours, then rinsing with clean water, and transferring to an aqueous PBS solution for storage.

Elemental analysis by energy-dispersive X-ray spectroscopy (EDX) using an electron microscope shows that a carbon layer is present on the silicon surface of the single chip.

A Zeta potential at the interface of the carbon layer in a PBS electrolyte is measured to be -65 mV by atomic force microscope.

When the single chip is not in use for testing, storing the chip / carbon layer (electroosmotic channel modification layer 3) in an aqueous PBS solution can maintain the Zeta potential at the interface stable.

As shown in FIG. 3, the single chip is vertically placed in a measurement container 200, which is horizontally divided into two chambers, namely a first chamber and a second chamber. The first chamber and the second chamber are provided with a first electrode 310 and a second electrode 320, respectively. The first chamber, the micropore, the

electrosmotic channel, and the second chamber are all filled with a PBS electrolyte, and polyethylene microsphere particles to be detected are contained in the PBS electrolyte of the first chamber.

The electroosmotic channel modification layer 3 is negatively charged in the electrolyte. Due to the principle of charge neutrality, the electrolyte in the electroosmotic channel 101 becomes positively charged. When a voltage of -200 mV is applied between the first electrode 310 and the second electrode 320 (e.g., the first electrode 310 is grounded and the second electrode 320 is connected to a negative voltage), an electric field is formed in the electrolyte. The positively charged electrolyte in the electroosmotic channel moves as a whole toward the second electrode 320 under the influence of the electric field, thereby driving a liquid in the first chamber to pass through the nanopore and replenish the electroosmotic channel, and further driving the particles to be detected (e.g., polyethylene microspheres) in the first chamber to pass through the micropore 201. Thus, without any other driving force between the first chamber and the second chamber, nanoparticles in the first chamber can pass through the nanopore via this mechanism.

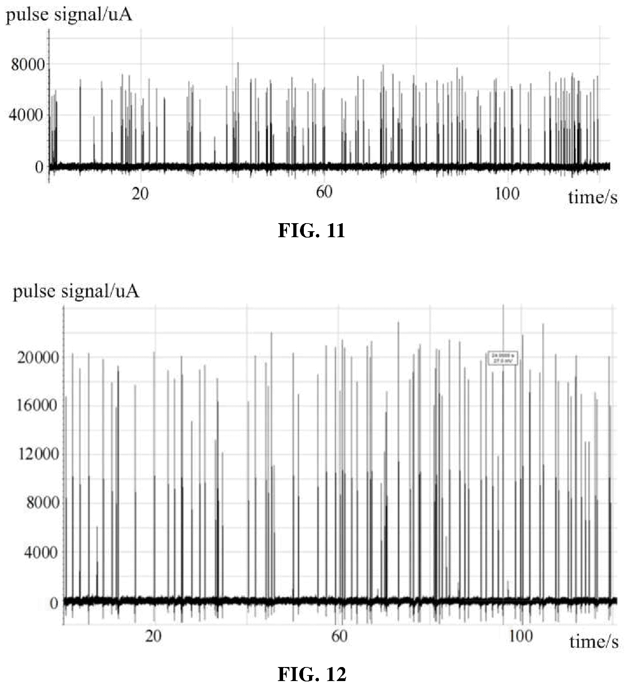

As shown in FIG. 11, a current flowing through the electrodes is measured, and a pulse signal of the polyethylene microspheres is detected.

As shown in FIG. 12, similarly, a pulse signal as illustrated is obtained in the measurement device using a 15 nm standard microsphere sample (average particle size: 15 nm, concentration: 2E9 particles/mL).

According to the following formula, the amplitude of the pulse signal is proportional to the volume of a particle and to the cube of the particle size of the particle.

$$\Delta V = \frac{4\rho_e}{\pi D^4} I d^3 .$$

;

where $\Delta V$ is a pulse voltage amplitude, $\rho_e$ is a resistivity of the electrolyte solution, I is a current through the nanopore, $\pi$ is the circular constant, d is a particle size of the nanoparticle, and D is a pore size of the nanopore.

An average pulse peak value of the 15 nm standard microsphere sample is 19000, and an average pulse peak of the polyethylene microspheres to be detected is 5600. The particle size of the polyethylene microspheres to be detected can be calculated to be 10 nm.

A flow rate through the nanopore per unit time is constant. Therefore, a greater number of particles per unit volume generates more pulse signals. The frequency of the pulse signals detected in the device is directly proportional to a particle concentration in the sample.

A pulse signal frequency measured for the 15 nm standard microsphere sample is 90 per minute, and a pulse signal frequency measured for the polyethylene microsphere sample to be detected is 60 per minute. The concentration of the polyethylene microsphere sample to be detected can be calculated to be $1.333 \times 10^9$ particles/mL.

Example 3

A polysilicon film having a thickness of 1 $\mu$m is grown on a boron nitride substrate having dimensions of 5 mm $\times$ 5 mm and a thickness of 0.5 mm. A recess having an inner diameter of 1 mm and a depth of 0.5 mm is formed in the boron nitride substrate, extending to the polysilicon film to serve as an electroosmotic channel. A titanium oxide layer is deposited on the inner wall of the electroosmotic channel to serve as an electroosmotic channel modification layer. At the center of the polysilicon film directly opposite the electroosmotic channel, a micropore having an inner diameter of 600 nm is provided.

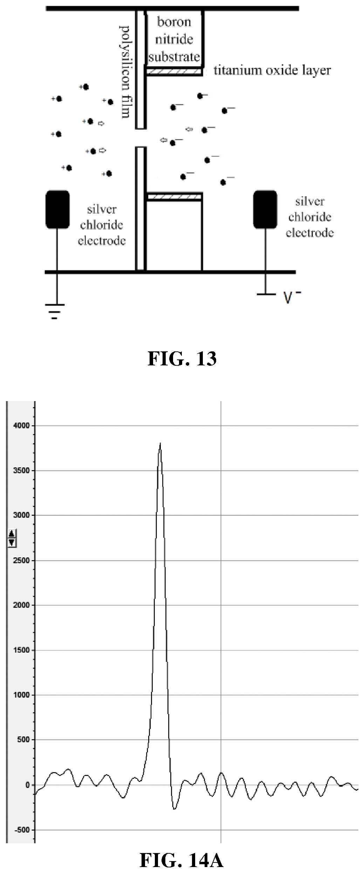

As shown in FIG. 13, the boron nitride sheet is vertically placed in a plastic container, which is horizontally divided into two chambers, namely a first chamber and a second chamber. The first chamber and the second chamber are provided with a first electrode and a second electrode, respectively. The first chamber, the nanopore, the electroosmotic channel, and the second chamber are all filled with a PBS solution, and silica microsphere particles to be detected are contained in the PBS electrolyte of the second chamber.

A Zeta potential at the interface of the electroosmotic channel modification layer in the PBS solution is measured to be -0.3 mV by atomic force microscope.

When the device is not in use, storing the electroosmotic channel modification layer in a Tris solution can maintain the Zeta potential at the interface stable.

As shown in FIG. 13, the electroosmotic channel modification layer is substantially uncharged in the PBS solution; the electrolyte in the electroosmotic channel is substantially charge-neutral; and the liquid in the electroosmotic channel exhibits substantially no flow. When a voltage is applied between the first electrode and the second electrode (e.g., the first electrode is grounded and the second electrode is connected to a negative voltage), an electric field is formed in the electrolyte. Negatively charged particles in the electrolyte in all chambers move toward the first electrode under the influence of the electric field, and positively charged particles in the electrolyte in all chambers move toward the second electrode under the influence of the electric field. Thus, when negatively charged particles are present in the second chamber, they pass through the electroosmotic channel and then through the nanopore under the influence of the electric field; when positively charged particles are present in the first chamber, they pass through the nanopore under the influence of the electric field. Without any other driving force between the first chamber and the second chamber, passage of microsphere particles through the nanopore is achieved via this mechanism.

Meanwhile, under the above mechanism, a velocity at which the particles pass through the nanopore is not affected by liquid flow or other driving forces, and the particles move only under the influence of an electric field force. The velocity at which the particles pass through the nanopore is directly proportional to the potential of the particles, and the transit time of the particles through the nanopore is inversely proportional to the potential of the particles.

As shown in FIG. 14A, the pulse width of a pulse signal of the silica microspheres to be detected is measured to be 0.2 ms.

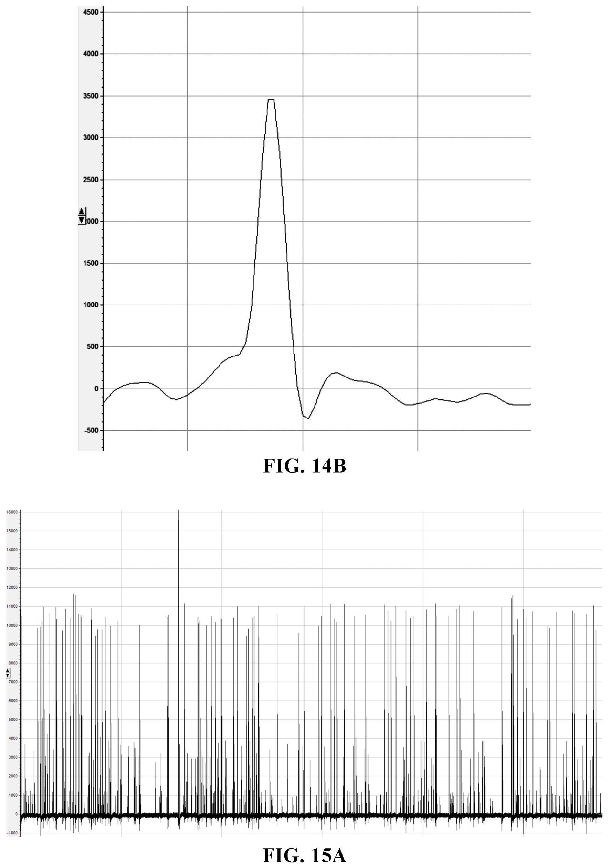

When tested using a 150 nm standard microsphere sample having the same particle size as that of the silica microspheres to be detected (average particle size: 150 nm, concentration: $3 \times 10^9$ particles/mL, average potential: -30 mV), the pulse width is measured to be 0.4 ms (FIG. 14B).

The potential of the silica microspheres to be detected can be approximately calculated to be -60 mV.

Similarly, as in Example 2, the particle size and the concentration of the silica microspheres to be detected can be calculated from the peak value and the frequency of the pulse signal.

Example 4: Influence of Inner Diameter of Electroosmotic Channel on Device

A polysilicon film having a thickness of 1 $\mu$m is grown on a boron nitride substrate having dimensions of 5 mm $\times$ 5 mm and a thickness of 0.5 mm. A recess having an inner diameter of 1 mm and a depth of 0.5 mm is formed in the boron nitride substrate, extending to the polysilicon film to serve as an electroosmotic channel. A titanium oxide layer is deposited on the inner wall of the electroosmotic channel to serve as an electroosmotic channel modification layer. At the center of the polysilicon film directly opposite the electroosmotic channel, a micropore having an inner diameter of 600 nm is provided.

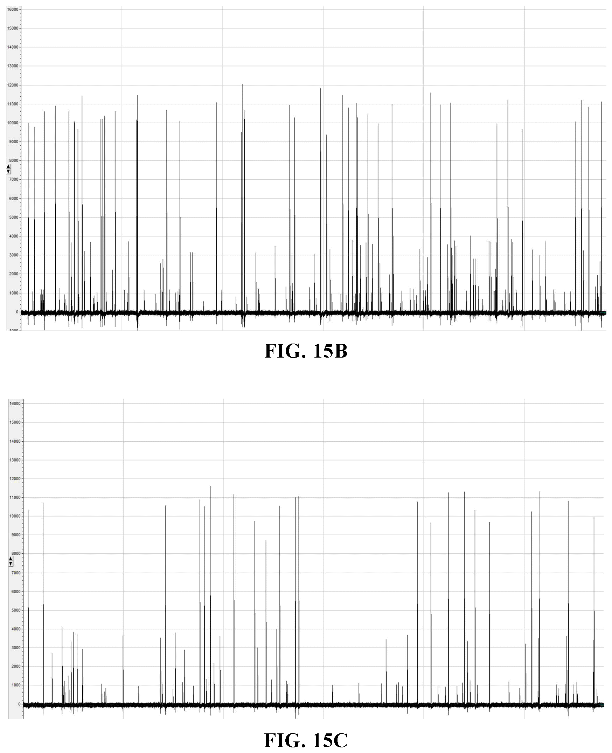

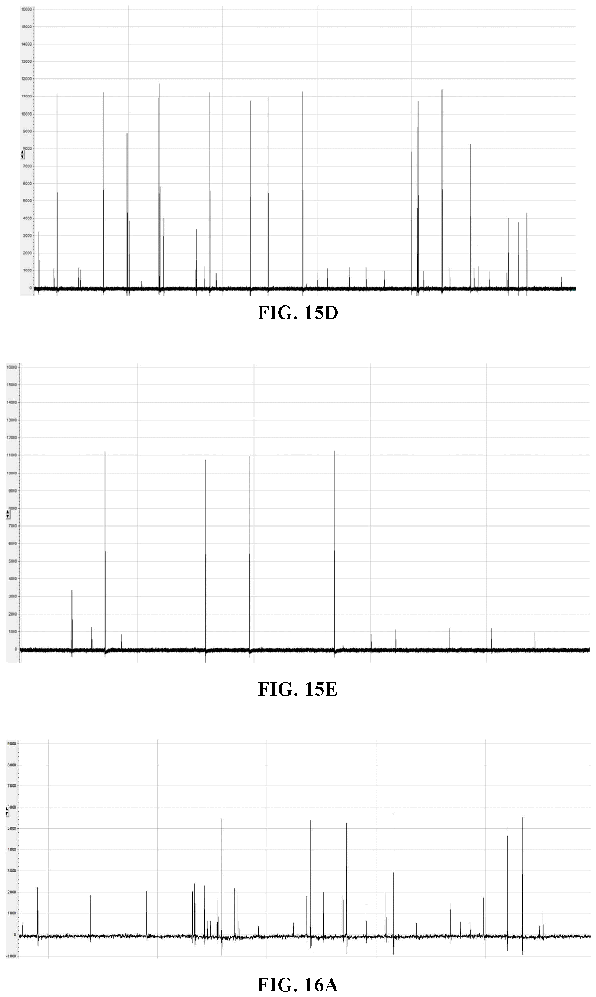

When 200 nm polyethylene microspheres are tested using the above chip, frequency data as shown in FIGS. 15A-15E and Table 2 are obtained. It can be seen that the detected pulse frequency becomes very low when the inner diameter of the electroosmotic channel exceeds 3 mm.

Table 2. Pulse Frequencies Detected at Different Inner Diameters of Electroosmotic Channel

| Inner Diameters of Electroosmotic Channel | 0.5mm | 1mm | 2mm | 3mm | 4mm |
|---|---|---|---|---|---|
| Pulse Signal Frequencies | 35 counts/min | 16 counts/min | 6 counts/min | 3 counts/min | 1 count/min |

Example 5: Influence of Electroosmotic Channel Depth on Device

A silicon nitride film having a thickness of 5 $\mu$m is grown on monocrystalline silicon substrates having dimensions of 5 mm $\times$ 5 mm and thicknesses of 25 $\mu$m, 100 $\mu$m, and 400 $\mu$m, respectively. A recess having an inner diameter of 25 $\mu$m is formed in the silicon substrate, with depths of 25 $\mu$m, 100 $\mu$m, and 400 $\mu$m extending to the silicon nitride film to serve as an electroosmotic channel. A silicon dioxide layer is deposited on the inner wall of the electroosmotic channel to serve as the electroosmotic channel modification layer. At the center of the silicon nitride film directly opposite the electroosmotic channel, a nanopore having an inner diameter of 5 $\mu$m is provided.

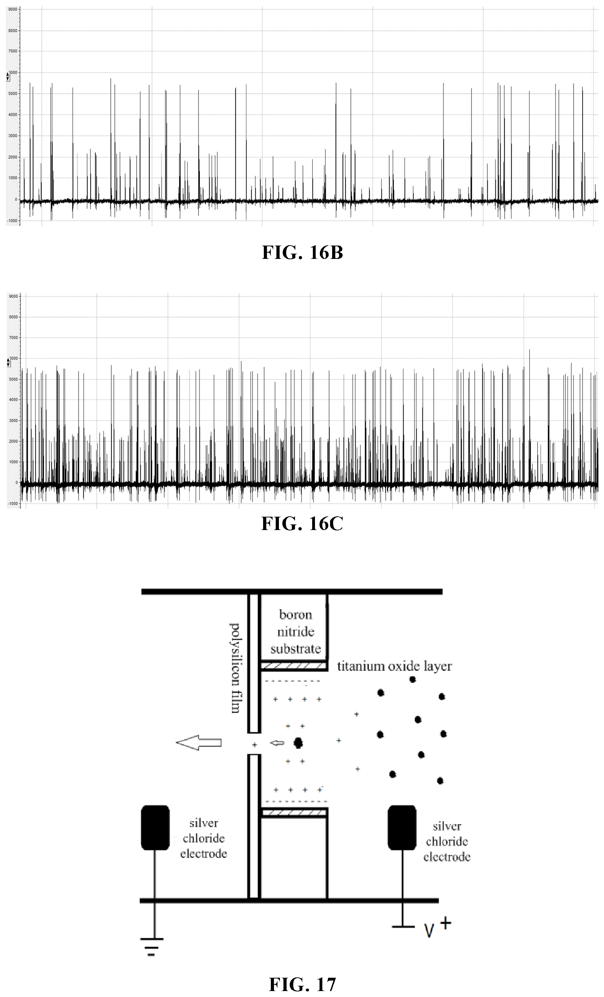

When 800 nm polyethylene microspheres are tested using the above chip, frequency data as shown in FIGS. 16A-16C and Table 3 are obtained. It can be seen that the detected pulse frequency becomes very low when the depth of the electroosmotic channel is less than five times the depth of the nanopore.

Table 3. Pulse frequencies Detected at Different Depths of Electroosmotic Channel

| Depths of Electroosmotic Channel | 25um | 100um | 400um |
|---|---|---|---|
| Pulse Signal Frequencies | 3 counts/min | 18 counts/min | 96 counts/min |

Example 6: Analysis of sdLDL Particle Concentration in Blood Samples

A blood sample to be detected is mixed with a magnetic bead solution coated with a specific binding antibody at a volume ratio of 1:1. The magnetic beads used are surface-coated with an antibody against protein ApoB100, and in this example, have a particle size of 1.6 $\mu$m and a concentration of $5.4 \times 10^{10}$ particles/mL. The mixed solution is incubated with continuous mixing at 1000 rpm and 37 °C for 30 minutes. After completion of the reaction, the magnetic beads are separated from the supernatant by magnetic adsorption. The supernatant is discarded, and the magnetic beads are washed three times with a wash solution. A dissociation solution mainly comprising trypsin is then added, and the mixture is thoroughly mixed and incubated with continuous mixing at 1000 rpm and 37 °C for 15 minutes. After magnetic separation of the magnetic beads, a dissociation supernatant containing the specific low-density lipoprotein is collected.

In this example, a micro-nanoparticle measurement device having a micropore diameter of 200 nm as shown in FIG. 17 is employed. Specifically, a 150 nm polysilicon film is formed on a boron nitride substrate as a film. A recess having an inner diameter of 3 mm and a depth of 1 mm is formed in the boron nitride substrate, extending to the polysilicon film to serve as an electroosmotic channel. A silicon nitride layer is deposited on the inner wall of the electroosmotic channel, and the silicon nitride layer is immersed in a sodium perchlorate solution to adsorb anions, thereby forming an electroosmotic channel modification layer. At the center of the polysilicon film directly opposite the electroosmotic channel, a micropore having an inner diameter of 200 nm is provided.

The boron nitride sheet is vertically placed in a plastic container, which is horizontally divided into two chambers, namely a first chamber and a second chamber. The first chamber and the second chamber are provided with a first electrode and a second electrode, respectively. The first chamber, the micropore, the electroosmotic channel, and the second chamber are all filled with an aqueous NaCl solution. Nanoparticles to be detected are contained in the PBS electrolyte in the second chamber.

A Zeta potential at the interface of the electroosmotic channel modification layer in the aqueous NaCl solution is measured to be -25 mV by atomic force microscope.

When a voltage is applied between the two electrodes (as shown in FIG. 17, the first electrode is grounded and the second electrode is connected to a positive voltage), an electric field is formed in the electrolyte, and the particles can pass through the nanopore via this mechanism without any other driving force.

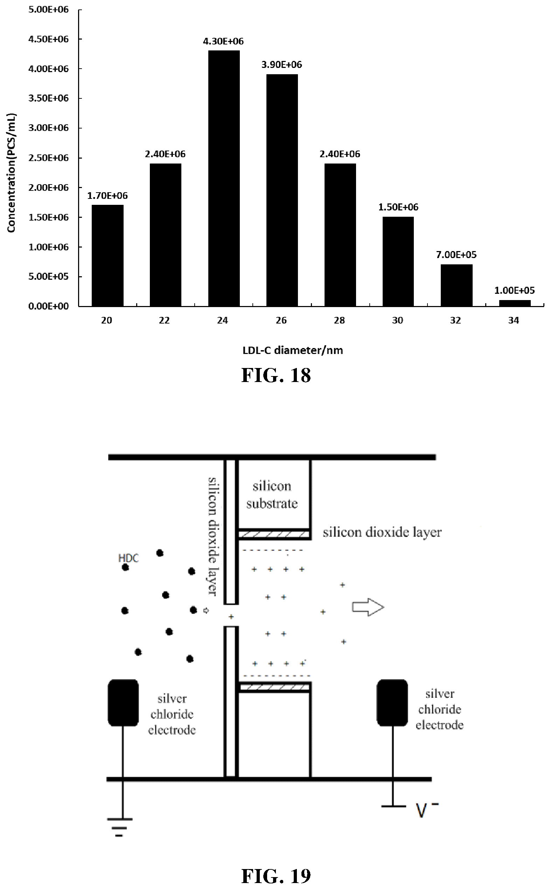

Subsequently, the particle size distribution of the obtained LDL-C particles and the particle concentration within each particle size range are detected using the above Nanocoulter technology, yielding a bar chart of LDL-C particle size and concentration as shown in FIG. 18.

In this example, detection is performed with parameters including a particle size resolution of 2 nm and a particle size detection range of 20-34 nm. As shown in FIG. 18, the numbers of particles in the range of 20-26 nm (the particle size distribution range of sdLDL particles) are measured to be $1.7 \times 10^6$, $2.4 \times 10^6$ and $4.3 \times 10^6$, respectively. The total number of particles in this range is $1.7 \times 10^6 + 2.4 \times 10^6 + 4.3 \times 10^6 = 8.4 \times 10^6$, i.e., an effectively detectable sdLDL particle concentration in this blood sample within a specific time is $8.4 \times 10^6$.

Example 7: Detection of Particle Size Distribution Ratio of Low-Density Lipoprotein Particles in Blood Sample

A blood sample to be detected is mixed with a magnetic bead solution coated with a specific binding antibody at a volume ratio of 1:1. The magnetic beads used are surface-coated with an antibody against protein ApoB100, and have a particle size of 2.4 μm and a concentration of $3.6 \times 10^5$/mL. The mixed solution is incubated with continuous mixing at 1000 rpm and 37 °C for 15 minutes. After completion of the reaction, the magnetic beads are separated from a supernatant by magnetic adsorption. The supernatant is discarded, and the magnetic beads are washed three times with a wash solution. A dissociation solution mainly comprising glycine is then added, and the mixture is thoroughly blended and incubated with continuous mixing at 1000 rpm and 37 °C for 30 minutes. After magnetic adsorption of the magnetic beads, a dissociation supernatant containing the specific low-density lipoprotein is collected.

In this example, a micro/nano particle detection device having a micropore size of 150 nm as shown in FIG. 19 is employed. Specifically, a silicon nitride film having a thickness of 100 nm is grown on a monocrystalline silicon substrate as a film. A recess having an inner diameter of 2 mm and a depth of 0.5 mm is formed in the silicon substrate, extending to the silicon nitride film to serve as an electroosmotic channel. A silicon dioxide layer is deposited on the inner wall of the electroosmotic channel to serve as the electroosmotic channel modification layer. At the center of the silicon nitride film directly opposite the electroosmotic channel, a micropore with an inner diameter of 150 nm is provided.

The silicon wafer is vertically placed in a plastic container, which is horizontally divided into two chambers, namely a first chamber and a second chamber. The first chamber and the second chamber are provided with a first electrode and a second electrode, respectively. The first chamber, the micropore, the electroosmotic channel, and the second chamber are all filled with a PBS electrolyte, and sample particles to be detected are contained in the PBS electrolyte of the first chamber.

A Zeta potential at the interface of the electroosmotic channel modification layer in the PBS electrolyte is measured to be -65 mV by atomic force microscope.

When a voltage is applied between the two electrodes (as shown in the figure, the first electrode is grounded and the second electrode is connected to a negative voltage), an electric field is formed in the electrolyte, and the particles can pass through the nanopore via this mechanism without any other driving force.

The particle size distribution of the obtained LDL-C particles and a particle concentration within each particle size range are detected using the above RPS technique, yielding a bar chart of LDL-C particle size and concentration as shown in FIG. 20. The proportion of sdLDL particles in total LDL-C particles is calculated.

In this example, detection is performed with parameters including a particle size resolution of 6 nm and a particle size detection range of 20-38 nm. As shown in FIG. 20, the number of particles in the range of 20-26 nm (the particle size distribution range of sdLDL particles) is measured to be $1.2 \times 10^7$, and the number of particles in the range of 26-38 nm is measured to be $3.1 \times 10^7$. Accordingly, the proportion of sdLDL particles in the total LDL-C particles detected in this blood sample within a specific time is $1.2 \times 10^7 / 3.1 \times 10^7 = 0.387$ (38.7%).

Example 8

50 $\mu$L of a blood sample to be detected and a series of concentration calibrators are taken and mixed with 100 $\mu$L of a magnetic bead reagent coated with specific binding antibodies (the same as in Example 7). The mixed solution is incubated at room temperature for 10 minutes. After completion of the reaction, the magnetic beads are separated from a supernatant by magnetic adsorption. The supernatant is discarded, and the magnetic beads are washed twice with a wash solution. After washing, an elution solution mainly comprising citric acid is added, and the mixture is thoroughly mixed and incubated at room temperature for 5 minutes. After magnetic adsorption of the magnetic beads, an elution supernatant containing the specific low-density lipoprotein is collected. Finally, a detectable sdLDL particle concentration in the sample under this reaction system is determined to be $4.2 \times 10^8$/mL by the same method as in Example 7, and a molar concentration of sdLDL in the sample is determined to be 0.37 mmol/L according to the established calibration curve. Establishment of the calibration curve is confirmed by the following method. The series of concentration calibrators provided by the present detection method are a series of calibrators having known molar concentrations, obtained by concentration-gradient dilution of LDL-C reference materials whose concentrations have been calibrated using a certified peroxidase-based kit. A corresponding relationship is established between particle concentrations obtained from the series of concentration calibrators using the present detection method, thereby obtaining a calibration curve between the LDL-C particle concentration and molar concentration in a sample.

Meanwhile, the above blood sample is detected using a certified peroxidase-based kit (e.g., Beijing Jiuqiang Biotechnology Co., Ltd., Cat. No.: GSSD), and the concentration thereof is measured to be 0.31 mmol/L. The detection results of the two methods are consistent. Different from existing kits, the detection method of the present disclosure can obtain not only a molar concentration of sdLDL, but also an sdLDL particle concentration and a particle size distribution. Compared with existing single-concentration analysis results, it has broader value in the field of blood lipid research.

Example 9: Method for Precisely Detecting Concentration of Gold Nanoparticles with an Average Particle Size of 50 nm $\pm$ 6 nm

1. A polystyrene microsphere sample having a large particle size is selected. First, the particle size thereof is measured and statistically analyzed by scanning electron microscopy. The total number of particles in different fields of view is more than 100, and the average particle size is about 2 $\mu$m, which is used to select an appropriate particle size measurement range for a micro/nano particle detection device. Next, the particle concentration thereof is detected by a microscopic counting method, and the particle concentration is calculated to be $2.31 \times 10^5$ particles/mL. In addition, two polystyrene microsphere samples having average particle sizes of about 800 nm and about 200 nm are respectively selected as intermediate concentration standards to be detected.

2. A schematic structural diagram of the micro/nano particle device used in this example is the same as that shown in FIG. 19. A silicon nitride film having a thickness of 400 nm is grown on a monocrystalline silicon substrate having dimensions of 5 mm $\times$ 5 mm and a thickness of 0.5 mm to serve as a film. A recess having an inner diameter of 2 mm and a depth of 0.5 mm is formed in the silicon substrate, extending to the silicon nitride film to serve as an electroosmotic channel. A silicon dioxide layer is deposited on the inner wall of the electroosmotic channel to serve as the electroosmotic channel modification layer. At the center of the silicon nitride film directly opposite the electroosmotic channel, a micropore with an inner diameter of 4 $\mu$m is provided. The silicon wafer is vertically placed in a plastic container, which is horizontally divided into two chambers, namely a first chamber (left side) and a second chamber (right side). The first chamber and the second chamber are provided with a first electrode and a second electrode, respectively. The first chamber, the micropore, the electroosmotic channel, and the second chamber are all filled with a PBS electrolyte, and microsphere particles to be detected are contained in the PBS electrolyte of the first chamber.

A Zeta potential at the interface of the electroosmotic channel modification layer in the PBS electrolyte is measured to be -45 mV by atomic force microscope.

Based on the signal-to-noise ratio analysis of an electrical signal and parameters of the pore, it is determined that the nanoparticle detection device can detect particles having a particle size ranging from 500 nm to 2 $\mu$m.

3. A particle concentration is detected using the above first-stage 4 $\mu$m nanopore particle detection device. The frequency of the pulse signals detected in the device is directly proportional to a particle concentration in a sample. The average pulse signal frequency of 2 μm microsphere particles having a concentration of $2.31\times10^5$ particles/mL is measured to be 82 counts/min. Meanwhile, a prepared intermediate microsphere standard having a particle size of about 800 nm is detected, and the average pulse signal frequency thereof is 367 counts/min. According to Formula 1 above, the concentration of the intermediate standard is calculated to be $1.03\times10^6$ particles/mL based on the proportional relationship between the pulse signal frequency and the particle concentration in the sample.

4. Similarly, a nanopore chip having a diameter of 1600 nm and a film thickness of 200 nm is prepared using the above process, so as to obtain a second-stage particle detection device (1600 nm nanopore particle detection device) having a particle size measurement range covering 200 nm to 800 nm. The microsphere standard having a particle size of about 800 nm is detected using this device, and the average pulse signal frequency thereof is measured to be 47 counts/min. Meanwhile, a prepared intermediate microsphere standard having a particle size of about 200 nm is detected, and the average pulse signal frequency thereof is measured to be 3290 counts/min. According to Formula 1 above, the concentration of the intermediate standard is calculated to be $7.21\times10^7$ particles/mL based on the proportional relationship between the pulse signal frequency and the particle concentration in the sample.

5. Similarly, a nanopore chip having a diameter of 400 nm and a film thickness of 400 nm is prepared using the above process, so as to obtain a third-stage particle detection device (400 nm nanopore particle detection device) having a particle size measurement range covering 40 nm to 200 nm. The microsphere standard having a particle size of about 200 nm is detected using this device, and the average pulse signal frequency is measured to be 92 counts/min. Meanwhile, a gold nanoparticle sample to be detected, having an average particle size of 50 nm $\pm$ 6 nm, is measured, and the average pulse signal frequency thereof is measured to be 1312 counts/min. According to Formula 1 above, the concentration of the gold nanoparticles is calculated to be $1.03\times10^9$ particles/mL based on the proportional relationship between the pulse signal frequency and the particle concentration in the sample, thereby achieving precise detection of a concentration value of a small-sized micro/nano particle sample around 50 nm.

Example 10

Referring to FIG. 13, under the influence of an electric field and based on the principle of electrophoresis, positively charged particles having a positive Zeta potential on a left side move toward a negative electrode under the influence of the electric field force. According to the Coulter principle, a change in the electrical signal is generated when the particles pass through a pore.

In this example, a micro/nano particle detection device used specifically includes: a polysilicon film having a thickness of 1000 nm (serving as a film) is grown on a boron nitride substrate having dimensions of 5 mm × 5 mm and a thickness of 0.5 mm. A recess having an inner diameter of 1 mm and a depth of 0.5 mm is formed in the boron nitride substrate, extending to the polysilicon film to serve as an electroosmotic channel. A titanium oxide layer is deposited on the inner wall of the electroosmotic channel to serve as the electroosmotic channel modification layer. At the center of the polysilicon film directly opposite the electroosmotic channel, a micropore having an inner diameter of 600 nm is provided.

The boron nitride sheet is vertically placed in a plastic container, which is horizontally divided into two chambers, namely a first chamber and a second chamber. The first chamber and the second chamber are provided with a first electrode and a second electrode, respectively. The first chamber, the micropore, the electroosmotic channel, and the second chamber are all filled with a PBS solution, and silica microsphere particles to be detected are contained in a PBS electrolyte of the second chamber.

A Zeta potential at the interface of the electroosmotic channel modification layer in the PBS solution is measured to be -0.3 mV by atomic force microscopy. When the device is not in use, storing the electroosmotic channel modification layer in a Tris solution can maintain the Zeta potential at the interface stable.

In this example, original data of pulse width and pulse peak value obtained from testing standard samples having different particle sizes of 150 nm, 200 nm, and 300 nm but similar (relatively close) Zeta potentials in the same detection device are shown in Table 4:

Table 4. Pulse Peak Values and Pulse Widths of Original Electrical Pulse Signals of Particles Having Known Particle Sizes in the Same Detection Device

| Particle Sizes (D) | 150nm | 200nm | 300nm |
|---|---|---|---|
| Pulse Peak (A) | 2020 | 4800 | 16000 |
| Pulse Width (W) | 1.80 | 4.01 | 11.02 |

Analysis of data in the above table shows that there is a correlation between a pulse width of particles and a particle size thereof, and a pulse peak value of a measurement signal is proportional to the cube of the particle size.

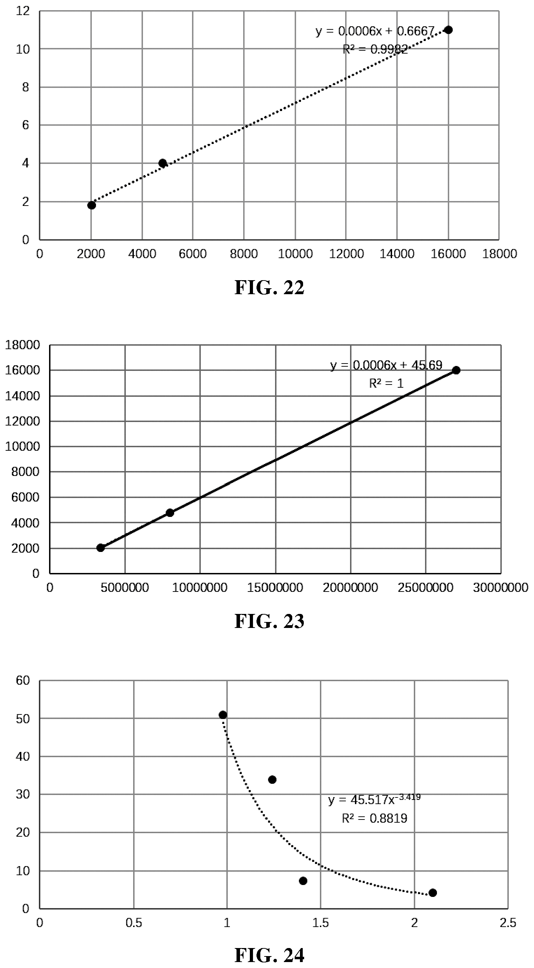

Specifically, a linear fitting result of W versus A is shown in FIG. 22, and a linear fitting result of A versus $D^3$ is shown in FIG. 23.

In this example, by analyzing the original data of pulse width and pulse peak value in Table 4, a correlation function therebetween is obtained as: $W=0.0006{\times}A+Wn$, i.e., the influence degree of the pulse peak value on the pulse width is $0.0006{\times}A$. $A=0.0006{\times}D^3$, i.e., a pulse height is proportional to the cube of the particle size. The pulse width calibration equation for a corrected pulse width Wn, obtained after eliminating the influence of particle size using the pulse peak value, is: $Wn=W-0.0006{\times}A$, or $Wn=W-0.00000036{\times}D^3$. At this point, Wn is related only to a Zeta potential of the particles.

Next, samples having the same particle size D=100 nm but different Zeta potentials are measured. The corrected pulse width value Wn is calculated from original pulse width data W thereof according to the above pulse width calibration equation, where the pulse peak value is 600 (substituting A=600 into $Wn=W-0.0006{\times}A$, or substituting D=100 into $Wn=W-0.00000036{\times}D^3$). Based on a comprehensively analyzed relationship, the measured data thereof are shown in Table 5:

Table 5. Detection Data and Corrected Data of Particles Having Same Particle Size but Different Zeta Potentials in Same Particle Detection Device

| Pulse Width W: | 2.472 | 1.765 | 1.603 | 1.341 |
| --- | --- | --- | --- | --- |
| Corrected Pulse Width Values Wn: | 2.112 | 1.405 | 1.243 | 0.981 |

Absolute values Z of known potentials of the above particle samples and corrected pulse width values Wn from Table 5 are shown in Table 6:

Table 6. Corrected Data of Particles having Same Particle Size in Same Particle Detection Device and Zeta Potentials Thereof

| Corrected Pulse Width Values Wn: | 2.112 | 1.405 | 1.243 | 0.981 |
| --- | --- | --- | --- | --- |
| Absolute Values of Zeta potentials | 4.29 | 7.36 | 33.92 | 51 |

Based on the above analysis in conjunction with Table 6, a functional relationship between the absolute Zeta potential Z and Wn is obtained as: $Z = 45.517{\cdot}Wn^{(-3.418)}$, and a corresponding fitting curve thereof is shown in FIG. 24.

In summary, when performing particle detection using the particle detection device provided in this example, an equation for calculating an absolute value of a particle Zeta potential, i.e., the particle Zeta potential calculation model of the particle detection device in this example, is: $Z=45.517{\times}(W-0.0006{\times}A)^{(-3.418)}$, where: Z is the absolute value of the particle Zeta potential, W is the pulse width of the particle, A is the pulse peak of the particle, 0.0006 is a pulse coefficient, 45.517 is a potential coefficient, and -3.418 is a potential exponent.

Comparative Example

The same particle detection device as in this example is used to detect unknown particle sample 1. Specifically, the device is used to test sample 1, with an electrode on a side where unknown particle sample 1 is added being grounded, and a positive voltage being applied to an electrode on a side where a blank electrolyte is added. A pulse signal is detected, indicating that particles in unknown particle sample 1 are negatively charged.

Through detection, a pulse peak A of unknown particle sample 1 is determined to be 1050, and the pulse width thereof is determined to be 1.782. Using an equation for calculating the absolute value of a particle Zeta potential obtained in this example: $Z = 45.517 {\times} (W - 0.0006 {\times} A)^{(-3.418)}$, a Zeta potential of the particles is calculated to be -28 mV, and the particle size thereof is also calculated to be 121 nm.

The particles in unknown particle sample 1 are verified by electron microscopy, and the surface potential value of the particles is verified to be -30 mV by an ELS instrument, indicating that the measured and calculated values are highly accurate. Therefore, the particle Zeta potential calculation model obtained in the present application can accurately and effectively calculate the Zeta potential of particles to be detected.

The foregoing specific examples are used to illustrate the present disclosure merely for facilitating understanding thereof, and are not intended to limit the present disclosure. For those skilled in the art to which the present disclosure pertains, several simple deductions, modifications or substitutions may be made based on the concept of the present disclosure.

**Claims**

1. A device for detecting micro/nano particles, comprising:

   a first chamber provided with a first electrode;
   a second chamber adjacent to the first chamber and provided with a second electrode;
   a substrate separating the first chamber and the second chamber;
   a film covering a side of the substrate facing the first chamber;
   wherein:

   the film is provided with a micropore;
   the substrate is provided with an electroosmotic channel, wherein an inner diameter of the electroosmotic channel is larger than a pore size of the micropore and smaller than an inner diameter of the second chamber;
   the first chamber and the second chamber are in communication through the micropore and the electroosmotic channel; and
   an inner wall of the electroosmotic channel is provided with an electroosmotic channel modification layer, wherein an interface of the electroosmotic channel modification layer has a specific Zeta potential when in contact with an electrolyte.

2. The device according to claim 1, wherein the pore size of the micropore ranges from 20 nm to 5 μm;

   preferably, wherein the inner diameter of the electroosmotic channel is 3 mm or less;
   preferably, wherein a depth of the electroosmotic channel is at least 5 times a depth of the micropore.

3. The device according to claim 1, wherein an interface of the electroosmotic channel modification layer has a Zeta potential more negative than -20 mV when in contact with the electrolyte;

   preferably, wherein a material of the electroosmotic channel modification layer is selected from a group consisting of: amorphous carbon, carbon chain polymer, silicon oxide, silicon nitride, polysilicon, monocrystalline silicon, and an adsorption layer formed by adsorption of anions thereon;
   preferably, wherein the interface of the electroosmotic channel modification layer has a Zeta potential value of -65 ± 6 mV when in contact with the electrolyte;
   preferably, wherein the electroosmotic channel modification layer further covers an interface between the film and the electroosmotic channel and an inner wall of the micropore.

4. The device according to claim 1, wherein the interface of the electroosmotic channel modification layer has a Zeta potential with an absolute value of not greater than 10 mV when in contact with the electrolyte;

   preferably, wherein a material of the electroosmotic channel modification layer is selected from the group consisting of: titanium oxide, aluminum oxide, and magnesium oxide;
   preferably, wherein the interface of the electroosmotic channel modification layer has a Zeta potential value of 0 ± 3 mV when in contact with the electrolyte;
   preferably, wherein the electroosmotic channel modification layer further covers an interface between the film and the electroosmotic channel and an inner wall of the micropore.

5. The device according to claim 1, further comprising a liquid driver configured to drive a flow of the electrolyte.

6. A method for detecting micro/nano particles, comprising:

   placing an electrolyte in the device according to any one of claims 1 to 5;
   placing the micro/nano particles to be detected in the first chamber or the second chamber of the device;
   applying a voltage or a current between the first electrode and the second electrode of the device;
   detecting a change in a current signal or a voltage signal at the electrodes; and
   determining at least one of a particle size, a concentration, or potential information of the micro/nano particles to be detected, based on a change in the current signal or the voltage signal.

7. The method according to claim 6, comprising:

using a standard microsphere with known particle size and concentration, and obtaining a peak value and a frequency of an electrical pulse signal generated by the standard microsphere in the device;
detecting a peak value and a frequency of an electrical pulse signal generated by the micro/nano particles to be detected in the device; and
obtaining a particle size and a concentration of the micro/nano particles to be detected based on a ratio between the peak values and the frequencies of the electrical pulse signals of the standard microsphere and of the micro/nano particles to be detected.

8. The method according to claim 6, comprising:

using a standard microsphere with known particle size, concentration, and potential, and obtaining a peak value, a frequency, and a pulse width of an electrical pulse signal generated by the standard microsphere in the device according to claim 4;
detecting a peak value, a frequency, and a pulse width of an electrical pulse signal generated by the micro/nano particles to be detected in the device; and
obtaining a particle size, a concentration, and a potential of the micro/nano particles to be detected based on a ratio between the peak values, the frequencies, and the pulse widths of the electrical pulse signals of the standard microsphere and of the micro/nano particles to be detected.

9. A nanopore chip, comprising:

a substrate;
a film; and
an electroosmotic channel modification layer;
wherein:

the substrate has a first surface and a second surface opposite to the first surface, and is provided with an electroosmotic channel extending through from the second surface to the first surface;
the film is formed on the first surface, and the film is provided with at least one micropore, wherein a pore size of the micropore is smaller than a pore size of the electroosmotic channel, and wherein projections of all the micropores on the first surface are covered by a projection of the electroosmotic channel on the first surface;
the electroosmotic channel modification layer is formed on a side wall of the electroosmotic channel, and an interface of the electroosmotic channel modification layer has a specific Zeta potential when in contact with an electrolyte;
preferably, wherein the electroosmotic channel modification layer is configured to have a negative Zeta potential at the interface when immersed in the electrolyte.

10. The nanopore chip according to claim 9, further comprising:

a transition layer (4) formed between the film (2) and the substrate (1), the transition layer (4) having an opening or a through hole in communication with the micropore (201) and the electroosmotic channel (101);
and/or,
a protective layer (5) formed on the second surface, the protective layer (5) having an opening or a through hole in communication with the electroosmotic channel (101).

10. A method for fabricating a nanopore chip, comprising:

providing a substrate (1);
forming a film (2) on a first surface of the substrate (1), the film (2) having at least one micropore (201);
forming, on a second surface of the substrate (1), an electroosmotic channel (101) extending through to the first surface, and forming an electroosmotic channel modification layer (3) on a side wall of the electroosmotic channel (101) wherein the electroosmotic channel modification layer (3) is configured to have a negative Zeta potential at an interface thereof when immersed in an electrolyte;
wherein a pore size of the micropore (201) is smaller than a pore size of the electroosmotic channel (101), and wherein projections of all the micropores (201) on the first surface are covered by a projection of the electroosmotic channel (101) on the first surface.

11. The manufacturing method according to claim 10, wherein

the electroosmotic channel modification layer (3) is an amorphous carbon layer or a carbon chain polymer layer; and

the electroosmotic channel modification layer (3) is formed after forming the electroosmotic channel (101);

wherein forming, on the second surface of the substrate (1), the electroosmotic channel (101) extending through to the first surface comprises:

patterning the substrate (1) using a wet etching process to form the electroosmotic channel (101) extending through from the second surface to the first surface; and

wherein forming the negative electroosmotic channel modification layer (3) on the side wall of the electroosmotic channel (101) comprises:

treating the side wall of the electroosmotic channel (101) with a passivation process using a hydrocarbon or fluorocarbon plasma, thereby forming the amorphous carbon layer or the carbon chain polymer layer as the electroosmotic channel modification layer (3).

12. The manufacturing method according to claim 10, wherein:

the electroosmotic channel modification layer (3) is an amorphous carbon layer or a carbon chain polymer layer; and

the negative electroosmotic channel modification layer (3) is formed during formation of the electroosmotic channel (101);

wherein forming, on the second surface of the substrate (1), the electroosmotic channel (101) extending through to the first surface and forming the electroosmotic channel modification layer (3) on the side wall of the electroosmotic channel (101) comprise:

performing an etching step comprising patterning the substrate (1) using a dry etching process to form a recess having a first depth in the second surface of the substrate (1), wherein the first depth is less than a thickness of the substrate (1);

performing a passivation step comprising treating a side wall of the recess with a passivation process using a hydrocarbon or fluorocarbon plasma, thereby forming the amorphous carbon layer or the carbon chain polymer layer as the electroosmotic channel modification layer (3); and

repeating the etching step and the passivation step until a depth of the recess equals the thickness of the substrate (1), thereby forming the electroosmotic channel (101) extending through to the first surface, and forming the electroosmotic channel modification layer (3) on the side wall of the electroosmotic channel (101).

13. The manufacturing method according to claim 11 or 12, wherein the fluorocarbon is octafluorocyclobutane.

14. The manufacturing method according to any one of claims 9 to 11, further comprising:
immersing the nanopore chip in an alkaline salt solution, a phosphate solution, or a HEPES solution.

15. A method for analyzing low-density lipoprotein cholesterol (LDL-C), comprising:

1) specifically capturing and separating LDL-C particles from a sample; and

2) detecting a current pulse signal or a voltage pulse signal generated at an electrode when the LDL-C particles obtained in step 1) pass through the micropore of the device according to any one of claims 1 to 5, and analyzing, based on the detected pulse signals, a particle size distribution of the LDL-C particles and a particle concentration within each particle size range in the sample;

wherein a pore size of the micropore is not greater than 200 nm, and a pore depth of the micropore is not greater than 150 nm.

16. The method according to claim 15, wherein step 1) comprises:

specifically capturing the LDL-C particles from the sample using magnetic beads conjugated with an antibody or an aptamer that specifically binds to a surface membrane protein of the LDL-C particles to be analyzed;
preferably, wherein the antibody is an antibody against protein ApoB100;
preferably, wherein after the capturing in step 1), the magnetic beads are magnetically retained in a local area in a magnetic field, and a wash solution is then added to replace a mixture of the magnetic beads and the sample in the magnetic field area;

preferably, wherein after the replacement with the wash solution, a dissociation solution is added to the mixture to elute the magnetic beads, thereby separating the captured LDL-C particles from the magnetic beads;

preferably, wherein the dissociation solution comprises trypsin, salicylic acid, glycine, or citric acid;

preferably, wherein the electroosmotic channel modification layer of the device is a silicon dioxide layer or a silicon nitride layer.

**17.** A method for tracing a particle concentration value of small-sized nanoparticles, wherein the small-sized nanoparticles have a particle size ranging from 20 nm to 400 nm, inclusive, the method comprising:

designing a plurality of intermediate samples, each intermediate sample having an unknown particle concentration value and a particle size between that of a reference particle sample having a known particle concentration value and that of a sample of small-sized nanoparticles to be measured;

arranging the reference particle sample, a first intermediate sample, a second intermediate sample, ..., an Nth intermediate sample, and the sample of small-sized nanoparticles to be measured in an order of decreasing particle size, wherein N is a positive integer greater than or equal to 1;

wherein the intermediate samples are designed such that, for every two adjacent samples in the order, their respective particle sizes fall within a detection range of the device of any one of claims 1 to 5;

sequentially detecting, in the order of decreasing particle size, every two adjacent samples using the same device;

calculating a particle concentration value of the sample having the unknown particle concentration value in a pair of adjacent samples, based on detection parameter values obtained from the pair and

on the known particle concentration value of the other sample in the pair; and

repeating the detecting and calculating steps sequentially to ultimately determine the particle concentration value of the sample of small-sized nanoparticles to be measured;

wherein the particle concentration value of the sample having the unknown particle concentration value is calculated according to Formula 1:

$$C\_unknown = C\_known \times P\_unknown / P\_known$$

wherein:

C_unknown is the particle concentration value of the sample having the unknown particle concentration value;

C_known is the particle concentration value of the sample having the known particle concentration value;

P_unknown is a voltage or current pulse frequency obtained from detecting the sample having the unknown particle concentration value; and

P_known is a voltage or current pulse frequency obtained from detecting the sample having the known particle concentration value;

wherein the detection range of the device is defined by following conditions:

1) for the two adjacent samples, the particle size of the sample having a larger particle size is less than or equal to 60% of a pore size of the micropore of the device;

2) for the two adjacent samples, a baseline amplitude of a pulse signal from the sample having the larger particle size is less than a pulse signal height from the sample having a smaller particle size;

3) a pore depth of the micropore of the device is less than or equal to the pore size of the micropore and greater than or equal to one-tenth of the pore size of the micropore.

**18.** The method according to claim 17, wherein the microparticle sample having the known particle concentration value is a particle standard reference material;

preferably, wherein the device comprises a micropore and an electroosmotic channel in communication with the micropore, the electroosmotic channel having an inner wall provided with an electroosmotic channel modification layer, and wherein an interface of the electroosmotic channel modification layer has a negative Zeta potential when in contact with an electrolyte;

preferably, wherein the electroosmotic channel modification layer is a silicon dioxide layer or a silicon nitride layer;

preferably, wherein the two adjacent samples are detected using the same device.

19. A method for calculating a Zeta potential of particles, comprising:

obtaining detected electrical pulse signals from a plurality of particle samples having known particle sizes and known Zeta potentials, and recording a pulse peak value and a pulse width of each detected electrical pulse signal, wherein the detected electrical pulse signals are measured when particles in the samples pass through a detection region of the device of any one of claims 1 to 5 under an influence of an electric field force; and constructing a particle Zeta potential calculation model based on the particle sizes of the particles and on the pulse peak values and the pulse widths of the detected electrical pulse signals.

20. The method according to claim 19, wherein constructing the particle Zeta potential calculation model based on the particle sizes of the particles and the pulse peak values and pulse widths of the detected electrical pulse signals comprises:

constructing a training sample set by using, as modeling factors, the particle sizes of the particles and the pulse peak values and pulse widths of the detected electrical pulse signals, in combination with the Zeta potentials of the particles;
performing a plurality of types of model training based on the training sample set, and evaluating the trained models of the plurality of types; and
determining an optimal particle Zeta potential calculation model according to model evaluation indicators.

21. The method according to claim 19, comprising:

1) obtaining, by the micro/nano particle detection device according to any one of claims 1 to 5, detected electrical pulse signals from a plurality of known particle samples having different particle sizes and a same Zeta potential, and recording a pulse peak value and a pulse width of each electrical pulse signal;

obtaining a first relational expression based on the particle sizes of the particles and the pulse peak values of the detected electrical pulse signals, the first relational expression being:

$$A = a \times D^3,$$

where A is the pulse peak value of a particle, $D$ is the particle size of the particle, and $a$ is a particle size coefficient;
obtaining a second relational expression based on the pulse peak values and the pulse widths of the detected electrical pulse signals of the particles, the second relational expression being:

$$W = b \times A + Wn,$$

where $A$ is the pulse peak value of a particle, $W$ is the pulse width of the particle, $b$ is a pulse coefficient, and $Wn$ is a pulse width correction coefficient;

2) obtaining, by the device of step 1), detected electrical pulse signals from a plurality of known particle samples having a same particle size and different Zeta potentials, and recording a pulse width of each detected electrical pulse signal;

obtaining a fourth relational expression between the Zeta potential of a particle and the pulse peak value and the pulse width of the detected electrical pulse signal of the particle, based on the Zeta potentials of the particles and the pulse widths of the electrical pulse signals, in combination with the first relational expression and the second relational expression, the fourth relational expression being:

$$Z = d \times (W - b \times A)^e,$$

where $Z$ is an absolute value of the Zeta potential of a particle, $W$ is the pulse width of the particle, $A$ is the pulse peak value of the particle, *b* is the pulse coefficient, *d* is a potential coefficient, and *e* is a potential exponent.

22. The method according to claim 21, wherein the electroosmotic channel modification layer of the micro/nano particle detection device is a silicon dioxide layer or a silicon nitride layer; preferably, wherein an interface of the electroosmotic channel modification layer has a Zeta potential with an absolute value not greater than 10 mV when in contact with an electrolyte; preferably, wherein when the interface of the electroosmotic channel modification layer has a Zeta potential with an absolute value greater than 10 mV when in contact with the electrolyte, a pressure drive is applied between the first chamber and the second chamber, wherein the pressure drive is configured to counteract electroosmotic flow such that the particles pass through the micropore by traction of the electric field force.

23. A method for calculating a Zeta potential of a particle to be measured, comprising:

obtaining, by a micro/nano particle detection device according to any one of claims 1 to 5, a detected electrical pulse signal of the particle to be measured as it passes through a detection region under an influence of an electric field force;
inputting a pulse peak value and a pulse width of the obtained electrical pulse signal into a particle Zeta potential calculation model obtained by the calculation method according to any one of claims 20 to 23, to obtain the Zeta potential of the particle to be measured;
preferably, inputting the pulse peak value and the pulse width of the obtained electrical pulse signal into a fourth relational expression to obtain the Zeta potential of the particle to be measured,
the fourth relational expression being:

$$Z = d \times (W - b \times A)^e,$$

wherein

Z is an absolute value of the Zeta potential of the particle to be measured,
W is the pulse width of the particle to be measured,
A is the pulse peak of the particle to be measured,
b is a pulse coefficient,
d is a potential coefficient, and
e is a potential exponent.

24. A device for calculating a Zeta potential of a particle to be measured, comprising:

a signal acquisition module configured to obtain a detected electrical pulse signal of the particle to be measured as it passes through a detection region of a micro/nano particle detection device according to any one of claims 1 to 5 under an influence of an electric field force, wherein the detected electrical pulse signal comprises a pulse peak value and a pulse width of the electrical pulse signal; and
a signal processing module configured to input the obtained pulse peak value and the obtained pulse width into a particle Zeta potential calculation model obtained by the calculation method according to any one of claims 19 to 22, so as to obtain the Zeta potential of the particle to be measured.

25. A device for measuring micro/nano particles, comprising:

a sample chamber provided with a common electrode;
at least two measurement chambers adjacent to the sample chamber, the at least two measurement chambers comprising a first measurement chamber provided with a first measurement electrode and
a second measurement chamber provided with a second measurement electrode;
a substrate separating the sample chamber and the at least two measurement chambers;
a film covering a side of the substrate;
wherein:

the film is provided with at least a first micropore and a second micropore;
the substrate is provided with a first electroosmotic channel and a second electroosmotic channel, wherein an inner diameter of the first electroosmotic channel is larger than a pore size of the first micropore and smaller than an inner diameter of the first measurement chamber, and an inner diameter of the second electroosmotic channel is larger than a pore size of the second micropore and smaller than an inner diameter of the second measurement chamber;

the sample chamber and the first measurement chamber are in communication via the first micropore and the first electroosmotic channel;

the sample chamber and the second measurement chamber are in communication via the second micropore and the second electroosmotic channel;

an inner wall of the first electroosmotic channel is provided with a first electroosmotic channel modification layer, wherein an interface of the first electroosmotic channel modification layer has a specific first Zeta potential when in contact with an electrolyte; and

an inner wall of the second electroosmotic channel is provided with a second electroosmotic channel modification layer, wherein an interface of the second electroosmotic channel modification layer has a specific second Zeta potential when in contact with an electrolyte.

26. The device of claim 25, wherein the first micropore and the second micropore have different pore sizes;

preferably, wherein the film covers a side of the substrate facing the sample chamber;

preferably, wherein the film covers a side of the substrate facing the measurement chambers.

**FIG. 1**

**FIG. 2**

first chamber    second chamber

200

V₁    310    320    V₂
100

**FIG. 3**

| providing a substrate | 1 |

⇓

| forming a film (microporous film) on the first surface of the substrate | 2 |

⇓

| forming, on the second surface of the substrate, an electroosmotic channel extending through to the first surface, and forming an electroosmotic channel modification layer (a negative potential film layer) on the side wall of the electroosmotic channel | 3 |

**FIG. 4**

（A）    （B）

（C）

**FIG. 5**

**FIG. 6**

**FIG. 7**

**FIG. 8**

101

4

5

3

1

4

4

2

201

**FIG. 9**

4

5

301

4

1

4

2

201

（A）

4

5

301

4

1

4

2

201

（B）

4

5

301

4

1

4

2

201

（C）

4

5

301

4

1

4

2

201

（D）

4

5

301

4

1

4

2

201

（E）

**FIG. 10**

**FIG. 11**

**FIG. 12**

**FIG. 13**

**FIG. 14A**

**FIG. 14B**

**FIG. 15A**

**FIG. 15B**

**FIG. 15C**

**FIG. 15D**

**FIG. 15E**

**FIG. 16A**

**FIG. 16B**

**FIG. 16C**

**FIG. 17**

**FIG. 18**

**FIG. 19**

**FIG. 20**

**FIG. 21**

**FIG. 22**

**FIG. 23**

**FIG. 24**

## INTERNATIONAL SEARCH REPORT

| International application No. |
| --- |
| **PCT/CN2024/117787** |

### A. CLASSIFICATION OF SUBJECT MATTER

G01N 15/00(2024.01)i

According to International Patent Classification (IPC) or to both national classification and IPC

### B. FIELDS SEARCHED

Minimum documentation searched (classification system followed by classification symbols)

IPC:G01N

Documentation searched other than minimum documentation to the extent that such documents are included in the fields searched

Electronic data base consulted during the international search (name of data base and, where practicable, search terms used)

CNTXT, ENTXTC, CNKI: 瑞芯智造+科技有限公司, 熊贵, 王哲, 比, 标准, 捕获, 槽, 层, 磁珠, 单晶硅, 氮化硅, 蛋白, 等离子, 低密度脂蛋白, 钝化, 多晶硅, 分离, 峰, 颗粒, 刻蚀, 孔, 宽, 氯酸钠, 脉冲, 脉冲峰, 脉冲宽, 模型, 纳米孔, 浓度, 蚀刻, 碳链聚合物, 微孔, 无定形碳, 氧化硅, 氧化铝, 氧化镁, 氧化钛, ApoB, LDL, ZETA, current, single particlen, anopore, antibody, low-density lipoprotein, pulse signal, multiple particle, capture, slot, layer, magnetic, silicon, protein, plasma, low-density lipoprotein, passive, polysilicon, separation, peak, particle, etching, pore, width, pulse peak, pulse width, model, nanopore

### C. DOCUMENTS CONSIDERED TO BE RELEVANT

| Category* | Citation of document, with indication, where appropriate, of the relevant passages | Relevant to claim No. |
| --- | --- | --- |
| Y | CN 110823772 A (RESUN (SHENZHEN) TECH CO., LTD.) 21 February 2020 (2020-02-21) description, paragraphs 0029-0081, and figure 1 | 1-17, 26-27 |
| Y | CN 104568684 A (CHONGQING INSTITUTE OF GREEN AND INTELLIGENT TECHNOLOGY, CHINESE ACADEMY OF SCIENCES) 29 April 2015 (2015-04-29) description, paragraphs 0044-0077, and figures 1-5 | 1-17, 26-27 |
| Y | CN 111999490 A (RESUN (SHENZHEN) TECH CO., LTD.) 27 November 2020 (2020-11-27) description, paragraphs 0021-0045, and figures 1-13 | 7-8, 16-17 |
| Y | CN 104528631 A (INSTITUTE OF HIGH ENERGY PHYSICS, CHINESE ACADEMY OF SCIENCES) 22 April 2015 (2015-04-22) description, paragraphs 0019-0044 | 10, 12-15 |
| A | WO 2023106342 A1 (AIPORE INC.) 15 June 2023 (2023-06-15) entire document | 1-27 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **12 December 2024** | **23 December 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 772 854 A1**

## INTERNATIONAL SEARCH REPORT

| | International application No. |
|---|---|
| | **PCT/CN2024/117787** |

**C.    DOCUMENTS CONSIDERED TO BE RELEVANT**

| Category* | Citation of document, with indication, where appropriate, of the relevant passages | Relevant to claim No. |
|---|---|---|
| A | CN 110823773 A (RESUN (SHENZHEN) TECH CO., LTD.) 21 February 2020 (2020-02-21) entire document | 1-27 |
| A | US 2023159870 A1 (AIPORE INC.) 25 May 2023 (2023-05-25) entire document | 1-27 |
| A | CN 114934098 A (PEKING UNIVERSITY) 23 August 2022 (2022-08-23) entire document | 1-27 |

Form PCT/ISA/210 (second sheet) (July 2022)

## INTERNATIONAL SEARCH REPORT
### Information on patent family members

| International application No. |
|---|
| **PCT/CN2024/117787** |

| Patent document cited in search report | | | Publication date (day/month/year) | Patent family member(s) | | | Publication date (day/month/year) |
|---|---|---|---|---|---|---|---|
| CN | 110823772 | A | 21 February 2020 | None | | | |
| CN | 104568684 | A | 29 April 2015 | None | | | |
| CN | 111999490 | A | 27 November 2020 | None | | | |
| CN | 104528631 | A | 22 April 2015 | None | | | |
| WO | 2023106342 | A1 | 15 June 2023 | JP | 2023085018 | A | 20 June 2023 |
| CN | 110823773 | A | 21 February 2020 | WO | 2021098583 | A1 | 27 May 2021 |
| | | | | EP | 4063824 | A1 | 28 September 2022 |
| | | | | EP | 4063824 | A4 | 25 January 2023 |
| | | | | US | 2023236104 | A1 | 27 July 2023 |
| US | 2023159870 | A1 | 25 May 2023 | US | 11781099 | B2 | 10 October 2023 |
| | | | | WO | 2017110753 | A1 | 29 June 2017 |
| | | | | JP | 2017120257 | A | 06 July 2017 |
| | | | | JP | 2020173259 | A | 22 October 2020 |
| | | | | EP | 3396354 | A1 | 31 October 2018 |
| | | | | CN | 108474726 | A | 31 August 2018 |
| CN | 114934098 | A | 23 August 2022 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 211122429 U

- CN 105705934 B